# EUROPÄISCHE PATENTSCHRIFT

(11) **EP 3 162 548 B1**
(45) Veröffentlichungstag und Bekanntmachung des Hinweises auf die Patenterteilung: **15.05.2019**
(21) Anmeldenummer: 16192833.8
(22) Anmeldetag: 07.10.2016
(51) Int. Cl.: B29C 70/86, B29C 35/02, C08G 18/64, C08J 5/24, C08G 18/79, C08G 18/42, C08G 59/42, C08L 75/04, B29C 35/04, B29C 35/08

(54) **POLYURETHAN-PREPREGS MIT STEUERBARER KLEBRIGKEIT**
POLYURETHANE PREPREGS WITH CONTROLLABLE ADHESION
FEUILLES PRÉ-IMPRÉGNÉES EN POLYURÉTHANE À ADHÉRENCE COMMANDABLE

(30) Priorität: 30.10.2015 EP 15192266
(43) Veröffentlichungstag der Anmeldung: 03.05.2017
(73) Patentinhaber: Evonik Degussa GmbH, 45128 Essen (DE)
(72) Erfinder: Stapperfenne, Uwe, 42489 Wülfrath (DE); Schmidt, Marina-Elena, 45892 Gelsenkirchen (DE); Gutmann, Tobias, 46286 Dorsten (DE); Cron, Christina, 42555 Velbert (DE); Reemers, Sandra, 48151 Münster (DE)

(56) Entgegenhaltungen:
- EP-A1- 0 576 393
- DE-A1-102010 041 247
- DE-A1-102010 041 256
- DE-A1-102011 006 163
- US-A1- 2015 218 375
- US-B2- 8 455 090

## Beschreibung

Die Erfindung betrifft ein Verfahren zur Herstellung eines Prepregs auf Basis von Polyurethan, welches sich durch hohe Lagerstabilität bei Raumtemperatur, einem zweistufigen Reaktionsmechanismus und durch eine einstellbare Haftung auf Metalloberflächen auszeichnet. Daneben betrifft die Erfindung entsprechende Prepregs, deren Verwendung bei der Herstellung von Hybridbauteilen und entsprechend hergestellte Hybridbauteile.

Ein "Prepreg" ist ein Halbzeug, welches für die Herstellung von Faserverbundbauteilen bzw. Hybridbauteilen eingesetzt wird. Es besteht im Wesentlichen aus einem textilen Fasermaterial, welches mit einer Vorstufe eines Matrixmaterials imprägniert ist. Die Vorstufe des Matrixmaterials ist formbar und klebrig, sodass aus einem oder mehreren Prepregs eine Vorstufe des späteren Faserverbundbauteils oder Hybridbauteils gestalten lässt. Nach Abschluss der Formgebung wird die Vorstufe des Matrixmaterials durch Durchführung einer chemischen Reaktion in das endgültige, duroplastische Matrixmaterial überführt. Dadurch erhält das Faserverbundbauteil bzw. Hybridbauteil seine endgültige Steifigkeit.

Unter einem Faserverbundbauteil ist in diesem Zusammenhang ein Bauteil einer Maschine, eines Land-, Luft-, Raum-, oder Wasser-Fahrzeugs, eines Apparats, einer Anlage oder eines Geräts zu verstehen, welches aus unterschiedlichen, miteinander unlösbar verbundenen Werkstoffen aufgebaut ist, wobei mindestens ein Werkstoff als Fasern vorliegt und mindestens ein Werkstoff als Matrix die Fasern umgibt. Der Faserverbundwerkstoff ist deswegen ein heterogenes Material.

Ein Hybridbauteil ist im hier verwendeten Sinne ein besonderes Faserverbundbauteil, welches zum einen aus einem herkömmlichen homogenen Werkstoff wie beispielsweise Stahl oder Aluminium und zum anderen aus einem heterogenen Faserverbundwerkstoff besteht. Das Faserverbundmaterial weist eine hohe Haftung zum homogenen Werkstoff auf, so dass ein stabiler Verbund entsteht. Ein Hybridbauteil umfasst somit mindestens drei Werkstoffe, nämlich das homogene Material (meist ein Metallwerkstoff), das Matrixmaterial (meist organisches Polymer) und das Fasermaterial (üblicherweise organische oder anorganische Fasern).

Die hier beschriebene Erfindung befasst sich im Einzelnen mit der Zusammensetzung des Matrixmaterials. Genauer gesagt, handelt es sich bei diesem um eine latent härtende Polyurethanformulierung.

Unter Polyurethan ist eine Klasse von Polymeren zu verstehen, die durch Reaktion von Polyisocyanaten mit Polyolen erhalten werden. Polyurethan wird häufig als PU oder PUR abgekürzt.

In den letzten Jahren wurden Prepregs auf Polyurethan-Basis entwickelt, die sich durch eine Lagerstabilität bei Raumtemperatur auszeichnen. Unter Lagerstabilität ist die besondere Eigenschaft dieser Prepregs zu verstehen, über mehrere Monate bei Raumtemperatur gelagert werden zu können, ohne dass die Vorstufe des Matrixmaterials ihre Reaktivität verliert. Anders als Prepregs auf Basis von Epoxidharz müssen lagerstabile PU-Prepregs vor der Verarbeitung nicht aufwändig gekühlt werden; bei Raumtemperatur bleibt dieses Matrixmaterial monatelang in seiner Vorstufe und härtet nicht vorzeitig in die endgültige Form aus. Damit lassen sich lagerstabile PU-Prepregs deutlich einfacher handhaben als die bislang überwiegend eingesetzten Prepregs auf Basis von Epoxidharz. Lagerstabile PU-Prepregs helfen somit die Herstellkosten für Faserverbundbauteile signifikant zu reduzieren.

Da es bei der Herstellung von Hybridbauteilen auf eine gute Haftung zwischen dem homogenen Metallwerkstoff und dem heterogenen Faserverbundwerkstoff ankommt und die erste Generation lagerstabiler PU-Prepregs keine hierfür ausreichende Metallhaftung aufweisen, war die Verwendung dieser Prepregs bei der Herstellung von hybrider Strukturen bislang kaum möglich.

Lagerstabile PU-Prepregs der ersten Generation sind in US8455090 offenbart. Die dort verwendete Polyurethanmatrix liegt zunächst in einer festen, nicht klebrigen Form vor. Erst ab einer Temperatur oberhalb 100°C reagiert die Mischung zu einem vernetzten Polyurethan und bildet die Matrix des Faserverbundwerkstoffes. Der Vorteil dieser Prepregs besteht somit darin, dass sie sich bei der Verarbeitung während der Herstellung des erfindungsgemäßen Faserverbundbauteils plastisch verformen lassen. Vor der Aushärtung weist das Material alle positiven Verarbeitungseigenschaften eines Thermoplasten auf. Die Prepregs sind zudem in ihrem thermoplastischen Zustand über mehrere Monate und damit hinreichend lange lagerstabil, so dass die Produktion der Prepregs in einer ersten Betriebsstätte und die Formgebung der Prepregs zu dem Formkörper sowie dessen Endvernetzung an einem anderen, entfernten Ort erfolgen kann. Die Handhabung ohne besondere Lagerbedingungen stellt einen Vorteil gegenüber konventionellen Epoxidmatrices dar, die bei tiefen Temperaturen von etwa -18°C gelagert und aufwendig aufgetaut werden müssen, bevor sie verarbeitet werden können.

Nach der thermischen Aushärtung des Polyurethanmaterials zum Duroplasten werden gute mechanische Endeigenschaften, insbesondere hohe Festigkeiten und Steifigkeiten, sowie ein geringes Kriechverhalten und gute Chemikalienbeständigkeit erreicht.

Verantwortlich für den temperaturabhängigen Aushärtungsmechanismus sind latente Härter mit blockierten Isocyanatgruppen, genauer gesagt Uretdione, die durch Dimerisierung intern blockiert sind.

Die in der US8455090 beschriebenen Prepregs sind bei Raumtemperatur und auch bei Temperaturen bis zu 60°C nicht klebrig. Die Haftung an Metalloberflächen ist ohne weitere Vorbehandlung oder Verwendung eines Haftvermittlers gering. Deswegen lassen sich mit diesen Prepregs der ersten Generation zwar metallfreie Faserverbundbauteile aber kaum Hybridbauteile herstellen.

Eine zweite Generation lagerstabiler Polyurethan-Zusammensetzungen, die sich dank einer besonders hohen Metallhaftung auch zur Herstellung von Hybridbauteilen auf Basis von Stahl oder Aluminium eignen, sind in den zum Anmeldezeitpunkt noch nicht veröffentlichten Anmeldungen EP15164444.0 und US 14/705,485 bzw. EP 15164477.0 und US 14/705,563 beschrieben.

Die zum Anmeldezeitpunkt ebenfalls noch unveröffentlichte EP15183660.8 beschreibt ein PUbasiertes, lagerstabiles Prepreg, welches einen zweitstufigen Aushärtungsmechanismus aufweist und welches zur lokalen Verstärkung von überwiegend metallischen Bauteilen bestimmt ist. Dieses Verstärkungspatch weist eine vorzügliche Metallhaftung auf.

Leider haften diese Prepregs nicht nur am vorgesehenen Einsatzort gut an, sondern aufgrund ihrer Oberflächenklebrigkeit auch ungewollt an metallischen Oberflächen von Betriebseinrichtungen, mit denen sie bei der Herstellung der Hybridbauteile in Kontakt kommen. Hier sind zum Beispiel metallische Tabletts zu nennen, auf denen die Prepregs transportiert und gelagert werden, Greifer von Handhabungseinrichtungen, Presswerkzeuge und Ofentüren.

Dies führt dazu, dass die Betriebseinrichtungen, die mit den hinsichtlich Metallhaftung optimierten Prepregs in Kontakt kommen, mit einer geeigneten Antihaftbeschichtung etwa aus PTFE oder dergleichen versehen werden müssen. Dies ist nicht immer möglich und verkompliziert den Verfahrensablauf.

In Hinblick auf diesen Stand der Technik liegt der vorliegenden Erfindung die Aufgabe zu Grunde, lagerstabile Prepregs mit einem zweistufigen Aushärtungsmechanismus und guter Metallhaftung anzugeben, deren Oberflächenklebrigkeit während der Verarbeitung gezielt einstellbar ist. Auf diese Weise soll das ungewollte Anhaften an metallischen Oberflächen vermieden, gleichwohl aber eine gute gewollte Haftung an metallischen Teilen späterer Hybridbauteile weiterhin gewährleistet sein. Idealerweise sind die anzugebenen Prepregs solange nicht klebrig, bis sie an ihrem vorgesehen Einsatzort platziert sind und haften erst an ihrem Einsatzort gut an.

Gelöst wird diese Aufgabe durch ein Verfahren zur Herstellung von Prepregs mit den folgenden Schritten:
a) Bereitstellen einer reaktiven Zusammensetzung enthaltend zumindest die folgenden Bestandteile:
   ∘ Mindestens einen blockierten Härter, bei welchem es sich bevorzugt um ein intern blockiertes Uretdion handelt, dessen NCO-Funktionalität mindestens zwei beträgt,
   ∘ mindestens einen Binder, bei welchem es sich um eine Polyolverbindung handelt, dessen OH-Funktionalität drei bis sechs beträgt, und welcher mindestens eine polare funktionale Gruppe aufweist, welche ausgewählt ist aus einer Ester-, Carbonat-, Amid-, Urethan-, Urea-, Thioester- oder Thiocarbonatfunktionalität,
   ∘ mindestens ein Cobindemittel, bei welchem es sich um ein Epoxidharz handelt,
   ∘ mindestens ein mit dem Cobindemittel korrespondierender Härter, welcher ausgewählt ist aus der Gruppe umfassend die folgenden Substanzklassen: aliphatische Polyamine, zykloaliphatische Polyamine, Polyetheramine, Polymercaptane oder Polyamidoamine, Polycarbonsäuren, Polycarbonsäureanhydride;
b) Bereitstellen von Fasern;
c) Belegen der Fasern mit der reaktiven Zusammensetzung;
d) Beaufschlagen zumindest der reaktiven Zusammensetzung mit Wärme zwecks Durchführung einer ersten Vernetzungsreaktion, im Zuge derer Härter und Binder zu einem thermoplastischen Polymer umgesetzt werden, wobei die Fasern in das thermoplastische Polymer eingebettet werden;
e) Erhalt eines Prepregs umfassend das thermoplastische Polymer mit den darin eingebetteten Fasern,
wobei die reaktive Zusammensetzung dergestalt bereitgestellt wird, dass die nach der DSC-Methode gemäß DIN 53765 in der zweiten Aufheizkurve bei 10 K/min gemessene Glasübergangstemperatur des thermoplastischen Polymers oberhalb von 30°C liegt, indem
i) eine Polyolverbindung bzw. ein Gemisch mehrerer Polyolverbindungen als Binder eingesetzt wird, deren gemäß DIN 53 240-2 bestimmte OH-Zahl bzw. mittlere OH-Zahl oberhalb von
   300 mg KOH / g liegt,
   und/oder
ii) der Anteil an korrespondierendem Härter in der reaktiven Zusammensetzung größer als 2 Gew.-% gewählt wird, bezogen auf den gesamten Feststoffgehalt der reaktiven Zusammensetzung.

Ein Grundgedanke der Erfindung besteht darin, die reaktive Zusammensetzung, also die PU-Mischung, aus der später die Matrix hervor geht, so zusammenzustellen, dass die Glastemperatur des thermoplastischen Polymers (das ist die Vorstufe des späteren Matrixmaterials nach Durchführung der ersten Vernetzungsreaktion) oberhalb von 30°C liegt. Dies bedeutet, dass das thermoplastische Material und damit das Prepreg erst oberhalb von 30°C klebrig wird und bei niedrigeren Temperaturen nur eine geringe Oberflächenklebrigkeit aufweist. Um das Material am beabsichtigten Ort anhaften zu lassen, ist eine Erwärmung des Matrixmaterials auf Temperaturen oberhalb seiner Glastemperatur erforderlich. Dies kann beispielsweise mit einem beheizten Anpresswerkzeug oder lokaler Erwärmung des Metallteils, auf dem der Prepreg aufgeklebt wird, erfolgen. Zudem kann das Prepreg außerhalb des Füge- oder Presswerkzeugs unmittelbar vor dem Fügen mit dem (kalten) Metall erwärmt werden.

Solange der Prepreg unter der Glastemperatur des Matrixmaterials gelagert, transportiert oder gehandhabt wird, weist er eine geringe Oberflächenklebrigkeit auf und haftet damit nicht ungewollt irgendwo an. Die Glastemperatur wird auf einen Wert oberhalb von 30°C eingestellt, da unter normalen Umgebungsbedingungen in Lager, Transport und Produktion Temperaturen unter 30°C herrschen.

Zur Einstellung der Glastemperatur des thermoplastischen Prepregs schlägt die Erfindung zwei grundsätzlich unabhängige, sicher aber synergetisch ergänzende Maßnahmen vor, nämlich:
i) dass eine Polyolverbindung bzw. ein Gemisch mehrerer Polyolverbindungen als Binder eingesetzt wird, deren OH-Zahl bzw. mittlere OH-Zahl oberhalb von 300 mg KOH / g liegt,
ii) dass der Anteil an mit dem Cobindemittel korrespondierendem Härter in der reaktiven Zusammensetzung größer als 2 Gew.-% gewählt wird, bezogen auf den gesamten Feststoffgehalt der reaktiven Zusammensetzung.

Die Glastemperatur über 30°C kann also dadurch eingestellt werden, dass als Binder eine Polyolverbindung mit entsprechend großer OH-Zahl über 300 mg KOH / g verwendet wird, und/oder dass der Anteil an korrespondierendem Härter in der reaktiven Zusammensetzung größer als 2 Gew.-% gewählt wird.

Die Erfindung beruht also auf der Erkenntnis, dass sich die Glastemperatur und damit die Klebrigkeit des thermoplastischen Polymers durch Verwendung von Polyolen mit einer großen OH-Zahl als Binder und/oder durch Einsatz einer großen Menge an korrespondieren Härter erhöhen lässt:
Durch die erhöhte OH-Zahl des Binders wird die Anzahl an reaktiven Gruppen vor der Umsetzung und folglich auch die Anzahl an umgesetzten Gruppen nach dem ersten Reaktionsschritt erhöht. Auf diese Weise wird der Molekulargewichtsaufbau im ersten Reaktionsschritt - also bei der Herstellung des Prepregs - gesteigert. Da die Glasübergangstemperatur direkt mit der Kettenlänge (also dem mittleren Molekulargewicht) des Thermoplasten korreliert, resultiert eine Erhöhung der Glasübergangstemperatur. Analog führt ein erhöhter Anteil an korrespondierendem Härter (der typischerweise im Unterschuss zugegeben wird) zu einer erhöhten Anzahl an mit dem Cobindemittel umgesetzten Gruppen im ersten Reaktionsschritt. Auch dies bewirkt eine Erhöhung der Kettenlängen (Molekulargewicht) und somit eine Erhöhung der Glasübergangstemperatur.

Genutzt wird diese Erkenntnis bei der Verarbeitung der Prepregs, bei der die Klebrigkeit erst zum gewünschten Zeitpunkt durch Erwärmung oberhalb der Glastemperatur "eingeschaltet" wird.

Die von der Erfindung angestrebte Steuerung der Klebrigkeit erfolgt mithin zum einen durch die Formulierung der reaktiven Zusammensetzung und zum anderen durch die Temperaturführung im Zuge der Herstellung des Hybridbauteils. Es besteht somit ein unmittelbarer Zusammenhang zwischen der Herstellung des Prepregs und der Herstellung des Hybridbauteils.

Der erste notwendige Bestandteil der reaktiven Zusammensetzung ist ein blockierter Härter, dessen NCO-Funktionalität mindestens zwei beträgt.

Eine Anzahl von mindestens zwei blockierten Isocyanatgruppen pro Molekül (die so genannte NCO-Funktionalität) ist notwendig für die Erzeugung eines engmaschigen polymeren Netzwerkes mit hohen mechanischen Festigkeiten nach der Reaktion mit den eingesetzten Poylolen. Vorzugsweise wird ein intern blockiertes (also blockierungsmittelfreies) Uretdion als Härter eingesetzt.

Solche blockierungsmittelfreien Uretdione können hergestellt sein aus mindestens einer der folgenden Substanzen: Isophorondiisocyanat (IPDI), Hexamethylendiisocyanat (HDI), Diisocyanatodicyclohexylmethan (H12MDI), 2-Methylpentandiisocyanat (MPDI), Gemische aus 2,2,4-Trimethylhexamethylendiisocyanat und 2,4,4- Trimethylhexamethylendiisocyanat (TMDI), Norbornandiisocyanat (NBDI).

Besonders bevorzugt werden IPDI, HDI, TMDI und/oder H12MDI eingesetzt. Ganz besonders bevorzugt wird das Uretdion von IPDI und/oder HDI verwendet. Es können auch Mischungen von spezifikationsgemäßen Uretdionen als Härter eingesetzt werden.

Die bevorzugt eingesetzten Uretdione sind per se blockierungsmittelfrei. Die interne Blockierung über die Dimerisierung zur Uretdionstruktur ist reversibel, bei erhöhter Temperatur spaltet das Uretdion wieder in die ursprünglich vorhandenen beiden Isocyanatgruppen zurück, die mit dem Binder vernetzen können. Der Vorteil gegenüber externen Blockierungsmitteln ist, dass bei der Abspaltung keine flüchtigen Nebenprodukte entstehen. Diese können zur Bildung von Gasblasen zwischen Faserverbundwerkstoff und Metalloberfläche bzw. zwischen den einzelnen PrepregLagen und damit zu einer Delaminierung führen.

Die zweite notwendige Komponente der reaktiven Zusammensetzung ist der Binder. Bei dem Binder handelt es sich um eine Polyolverbindung, die drei bis sechs Hydroxylgruppen aufweist und welche mindestens eine polare funktionale Gruppe aufweist, welche ausgewählt ist aus einer Ester-, Carbonat-, Amid-, Urethan-, Urea-, Thioester- oder Thiocarbonatfunktionalität. Das Vorhandensein der polaren funktionellen Gruppe ist erforderlich um eine hohe Metallhaftung zu gewährleisten.

Die Anzahl der Hydroxylgruppen (Funktionalität) bestimmt maßgeblich die Vernetzungsdichte und somit die mechanischen Eigenschaften der ausgehärteten Matrix. Um ein dreidimensional eng vernetztes, duroplastisches Polymernetzwerk zu erhalten, ist eine Funktionalität der Polyolkomponente von mindestens drei erforderlich. Eine Funktionalität größer sechs führt hingegen dazu, dass das Polyurethan im duroplastischen Endzustand eine überhöhte Vernetzungsdichte erreicht und die Matrix versprödet. Im Ergebnis muss die OH-Funktionalität des als Binder eingesetzten Polyols zwischen drei und sechs liegen. Selbstverständlich können auch Mischungen verschiedener Polyole eingesetzt werden, was in der Praxis der Fall sein wird. Sofern mehrere Polyole verwendet werden, beziehen sich die Angaben der Funktionalität auf gemittelte Werte der Polyolmischung.

Außerdem muss mindestens eines der als Binder eingesetzten Polyole außer über Hydroxylgruppen über zusätzliche polare funktionelle Gruppen verfügen, die Wechselwirkungen mit Metalloberflächen eingehen. Hierzu zählen beispielsweise Ester-, Carbonat-, Amid-, Urethan-, Urea-, Thioester- oder Thiocarbonatgruppen. Beispiele für geeignete Polyole sind lineare oder verzweigte Hydroxylgruppen haltige Polyester, Polycarbonate, Polycaprolactone, Polyesteramide, Polyurethane oder Polyacetale. Polyether oder Polythioether weisen im Vergleich eine deutlich geringere Metallhaftung auf und sind daher als Hauptbestandteil der Polyolmischung nicht geeignet.

In einer besonders bevorzugten Variante der Erfindung wird ein Polyesterpolyol als Binder eingesetzt.

Polyesterpolyole sind lineare oder leicht verzweigte hydroxylgruppenhaltige Polyester. Diese sind aus ihrer Anwendung in der Metallbandbeschichtung (coil coating) für eine gute Metallhaftung bekannt; vgl. Organic Coatings: Sience and Technology, Z.W.Wicks, Jr.F. Jones, S.P.Pappas, Wiley-Interscience, New York 1999, cap. 24.2.1.2., Seite 459.

Die OH-Zahl des Polyesterpolyols sollte zwischen 20 mg KOH / g und 500 mg KOH / g liegen und deren Säurezahl höchstens 2 mg KOH / g betragen. Sofern der Anteil des korrespondieren Härters nicht oberhalb von 2 Gew.-% liegt, muss die OH-Zahl aller Polyole in der Mischung über 300 mg KOH/g liegen. Die OH-Zahl wird gemäß DIN 53 240-2 bestimmt; die Säurezahl gemäß DIN EN ISO 2114. Die molare Masse berechnet sich aus der Summe der Hydroxyl- und Carboxyl-Endgruppen. Das mittlere Molekulargewicht liegt bei 50 g/mol bis 10000 g/mol, bevorzugt 100 g/mol bis 5000 g/mol.

Polyesterpolyole werden beispielsweise über eine Polykondensationsreaktion, das heißt durch Umsetzung von Polyolen mit unterschüssigen Mengen an Polycarbonsäuren oder ihren Derivaten, wie z.B. Polycarbonsäureanhydriden, Polycarbonsäureestern von niederen Alkoholen, Lactonen oder Hydroxycarbonsäuren hergestellt.

Zur Herstellung der Polyesterpolyole geeignete Diole sind beispielsweise Ethylenglykol, 1,2-, 1,3-Propandiol, Diethylen-, Dipropylen-, Triethylen-, Tetraethylenglykol, 1,2-, 1,4-Butandiol, 1,3-Butylethylpropandiol, 1,3-Methylpropandiol, 1,5-Pentandiol, Bis-(1,4-hydroxymethyl)cyclohexan (Cyclohexandimethanol), Glycerin, Hexandiol, Neopentylglykol, Trimethylolethan, Trimethylolpropan, Pentaerythrit, Bisphenol A, B, C, F, Norbornylenglykol, 1,4-Benzyldimethanol, - ethanol, 2,4-Dimethyl-2-ethylhexan-1,3-diol, 1,4- und 2,3-Butylenglykol, Di-ßhydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.02,6]decan (Dicidol), 2,2-Bis-(4-hydroxycyclohexyl)propan, 2,2-Bis-[4-(ß-hydroxyethoxy)-phenyl]propan, 2-Methylpropandiol-1,3, 2-Methylpentandiol-1,5, 2,2,4(2,4,4)-Trimethylhexandiol-1,6, Hexantriol-1,2,6, Butan¬triol-1,2,4, Tris-(ß-hydroxyethyl)isocyanurat, Mannit, Sorbit, Polypropylenglykole, Polybutylenglykole, Xylylenglykol oder Hydroxypivalinsäureneopentylglykolester, 2-Methylpropandiol, 2,2-Dimethylpropandiol, Diethylenglykol, Dodecandiol-1,12, 1,4-Cyclohexandimethanol und 1,2- und 1,4-Cyclohexandiol.

Zur Herstellung der Polyesterpolyole geeignete Dicarbonsäuren oder Derivate können aliphatischer, cycloaliphatischer, aromatischer und/oder heteroaromatischer Natur sein und gegebenenfalls, z. B. durch Halogenatome, substituiert und/oder ungesättigt sein.

Zu den bevorzugten Dicarbonsäuren oder Derivaten zählen Propion-, Bernstein-, Glutar-, Adipin-, Kork-, Azelain- und Sebacin-, Azelain- und Dodecandisäure, 2,2,4 (2,4,4)-Trimethyladipinsäure, Phthalsäure, Phthalsäureanhydrid, Isophthalsäure, Terephthalsäure, Terephthalsäuredimethylester, Tetrahydrophthalsäure, Maleinsäure, Maleinsäureanhydrid und dimere Fettsäuren.

Die zur Herstellung der Polyesterpolyole verwendeten Diole und Dicarbonsäuren bzw. deren Derivate können in beliebigen Mischungen eingesetzt werden.

In einer bevorzugten Ausführungsvariante wird als Binder mindestens ein Polycaprolacton eingesetzt, dessen OH-Zahl zwischen 20 mg KOH / g und 1000 mg KOH / g liegt, dessen Säurezahl höchstens 2 mg KOH / g beträgt, dessen molare Masse zwischen 100 g/mol und 5000 g/mol liegt. Sofern der Anteil des korrespondieren Härters nicht oberhalb von 2 Gew.-% liegt, muss die OH-Zahl über 300 mg KOH/g liegen. Da die Polycaprolactone über eine kontrollierte ringöffnende Polymerisation hergestellt werden, lassen sich die geforderten hohe Hydoxylzahlen gezielt einstellen. Die OH-Zahl wird gemäß DIN 53 240-2 bestimmt; die Säurezahl gemäß DIN EN ISO 2114. Die molare Masse berechnet sich aus der Summe der Hydroxyl- und Carboxyl-Endgruppen. Solche Polycaprolactone sind beispielsweise aus der Produktlinie Capa® von Perstorp/Schweden erhältlich.

Die dritte notwendige Komponente der reaktiven Zusammensetzung ist das Cobindemittel. Dieses vernetzt zusammen mit dem korrespondierenden (zweiten) Härter bis zu einem geringen Aushärtungsgrad während der ersten Vernetzungsreaktion und endgültig in der zweiten Vernetzungsreaktion. Neben einer weiteren Verbesserung der mechanischen Eigenschaften im vernetzten Zustand führt dies zu einer zusätzlichen Verbesserung der Metallhaftung über polare Wechselwirkungen.

Als Cobindemittel kommen alle Epoxidharze, z. B. Polyepoxide auf Basis von Bisphenol A-diglycidylether, Bisphenol F-diglycidylether oder cycloaliphatische Typen wie z.B. 3,4-Epoxycyclohexyl-epoxyethan oder 3,4-Epoxycyclohexylmethyl-3,4-epoxy-cyclohexancarboxylat, in Frage. Erfindungsgemäß können auch Mischungen verschiedener Epoxidharze als Cobindemittel eingesetzt werden. Das Cobindemittel führt zu einer Verbesserung der Metallhaftung der Matrix und gleichzeitig zu einer zusätzlichen Vernetzung. Da das Cobindemittel in der reaktiven Zusammensetzung bereitgestellt wird, braucht es vor dem Anheften des Thermoplasts an dem Metall nicht wie ein Klebstoff separat aufgetragen zu werden. Es verbessert vielmehr die intrinsisch adhäsiven Eigenschaften der Matrix.

Das Epoxyequivalentgewicht (EEW) des Cobindemittels, bestimmt gemäß ASTM D 1652, liegt bevorzugt zwischen 100 und 1000 g/eq. Werden Epoxyverbindungen mit einem EEW oberhalb von 1000 g/eq eingesetzt, steigt die Viskosität der Matrix sehr stark an, so dass eine Verarbeitung erschwert wird. Zudem kommt es zu einer starken Versprödung der Matrix, so dass die mechanischen Eigenschaften sinken.

Die vierte notwendige Komponente der reaktiven Zusammensetzung ist mindestens ein mit dem Cobindemittel korrespondierender Härter, welcher ausgewählt ist aus der Gruppe umfassend die folgenden Substanzklassen: aliphatische Polyamine, zykloaliphatische Polyamine, Polyetheramine, Polymercaptane oder Polyamidoamine, Polycarbonsäuren, Polycarbonsäureanhydride.

Bevorzugt sind jedoch Polycarbonsäuren und deren Anhydride, die bei erhöhten Temperaturen unter Ringöffnung mit der Oxirankomponente des Cobindemittels zu Carbonsäureestern reagieren. Besonders bevorzugt werden die oligomeren Addukte von Benzol-1,2,4-tricarbonsäure-1,2-anhydrid oder Pyromellitsäureanhydrid mit Ethylenglykol und Glyzerol als korrespondierender Härter für das Cobindemittel verwendet.

Über den Anteil des korrespondierenden Härters kann die Glastemperatur gesteuert werden: Der korrespondierende Härter reagiert zusammen mit dem Cobindemittel zu einem zweiten dreidimensional Netzwerk neben dem PU-Netzwerk. Auf diese Weise trägt es zu einer Erhöhung der Glasübergangstemperatur der Gesamtmatrix bereits im thermoplastischen Zustand (als Vorstufe nach dem ersten Reaktionsschritt) als auch im duroplastischen Zustand (Endzustand nach dem zweiten Reaktionsschritt) bei. Ab einer Konzentration an korrespondierendem Härter von mehr als zwei Gewichtsprozent ist der Grad der Reaktion mit dem Epoxidharz nach dem ersten Reaktionsschritt bereits so hoch, dass auch in Gegenwart flüssiger Polyole mit OH-Zahlen unter 300 mg KOH/g Glasübergangstemperaturen oberhalb von 30°C erreicht werden. Der genannte Gewichtsanteil des korrespondierenden Härters bezieht sich auf den Feststoffgehalt der reaktiven Zusammensetzung, also das Gesamtgewicht der Komponenten ohne ein etwaiges Lösemittel.

Wenn der Anteil an korrespondieren Härter unter 2 Gew.-% liegt, genügt die Reaktion mit dem Epoxidharz im thermoplastischen Zustand hingegen nicht, um eine Glasübergangstemperatur oberhalb von 30°C sicherzustellen. Daher muss alternativ die OH-Zahl des als Binder eingesetzten Polyols über 300 mg KOH / g liegen, um die gewünschte Glastemperatur über 30°C zu erzielen.

Die hier angegebenen Glasübergangstemperaturen beziehen sich stets auf die Glasübergangstemperatur, die bei der DSC-Methode gemäß DIN 53765 in der zweiten Aufheizkurve bei 10 K/min gemessen wird.

Zusätzlich kann die reaktive Zusammensetzung weitere Komponenten, etwa Verarbeitungshilfsmittel oder Zusatzstoffe wie Rheologiemodifizierer, Trennmittel, Füllstoffe, Entlüfter, Entschäumer, Fließhilfsmittel, Benetzungsmittel, Flammschutzmittel, Farbpigmente und/oder Verlaufshilfsmittel enthalten. Für solche Komponenten wird im Folgenden der Sammelbegriff "Additive" gebraucht.

Zudem kann die Reaktivität der Zusammensetzung bei Bedarf über Zusatz eines Katalysators beschleunigt werden. Bei der Zugabe eines Katalysators ist jedoch zu beachten, dass die Anforderungen an die Lagerstabilität der thermoplastischen Polyurethanmatrix weiterhin erfüllt werden. Eine besondere Ausführungsform der Erfindung sieht sogar vor, dass die reaktive Zusammensetzung bewusst frei ist von Substanzen, die in der ersten und/oder zweiten Vernetzungsreaktion katalytisch wirken, um nicht eine ungewollte Vernetzung hervorzurufen und dadurch die Lagerstabilität zu schmälern.

Katalytisch wirkende Substanzen sind in diesem Zusammenhang quarternäre Ammoniumsalze, bevorzugt Tetralkylammoniumsalze und/oder quarternäre Phosphoniumsalze mit Halogenen, Hydroxiden, Alkoholaten oder organischen oder anorganischen Säureanionen als Gegenion. Beispiele dafür sind Tetramethylammoniumformiat, -acetat, -propionat, -butyrat oder -benzoat, sowie die entsprechenden Tetraethyl-, Tetrapropyl- und Tetrabutylammonium oder - phosphoniumsalze.

Die reaktive Zusammensetzung kann wahlweise trocken oder flüssig bereitgestellt werden.

In trockener Form liegt die reaktive Zusammensetzung als Pulver vor. Dieses wird auf die Fasern aufgestreut und/oder aufgeschmolzen, damit es vor dem Anvernetzen nicht von den Fasern fällt.

Alternativ werden die Bestandteile der Zusammensetzung in einem flüssigen Lösemittel gelöst oder zumindest suspendiert oder dispergiert, falls sich nicht alle Bestandteile lösen lassen. Die Zusammensetzung ist damit praktisch flüssig und die Fasern werden mit der flüssigen Zusammensetzung imprägniert. Die flüssig im Lösemittel bereitgestellte Zusammensetzung ist technologisch einfacher zu handhaben als trockene, pulverförmige Zusammensetzungen. Nachteilig bei der Verwendung von Lösungsmitteln können bei einer ungenügenden Trocknung verbleibende flüchtige Bestandteile sein, die nach der ersten Vernetzungsreaktion im Polymer verbleiben und zu Blasenbildung führen können. Allerdings geschieht das Entfernen des Lösungsmittels im Zuge der Durchführung der ersten Vernetzungsreaktion durch Verdampfen unter der ohnehin notwendigen Wärmeeinwirkung, weswegen kein zusätzlicher Arbeitsschritt erforderlich wird.

Eine bevorzugte Ausführungsform der Erfindung besteht mithin darin dass die Zusammensetzung in einem flüssigen Lösemittel bereitgestellt wird, wobei die Bestandteile der Zusammensetzung in dem Lösemittel gelöst und/oder suspendiert und/oder dispergiert sind, sodass das Belegen der Fasern mit der Zusammensetzung dadurch erfolgt, dass die Fasern mit dem Lösemittel und der darin gelösten bzw. suspendierten bzw. dispergierten Bestandteile imprägniert werden, und dass das Lösemittel im Zuge der Durchführung der ersten Vernetzungsreaktion größtenteils, jedoch zumindest teilweise aus den Fasern verdampft wird.

Das Lösemittel muss daher nicht nur die Komponenten der reaktiven Zusammensetzung möglichst vollständig lösen, sondern sich auch bei der zwecks Durchführung der ersten Vernetzungsreaktion vorgenommenen Beaufschlagung der Zusammensetzung mit Wärme möglichst vollständig verflüchtigen.

Für diesen Zweck geeignete Lösungsmittel sind polare, aprotische Substanzen mit hohen Siedepunkten, wie Ester und/oder Ketone. Besonders bevorzugt werden die Substanzen Isopropylacetat und Methylisobutylketon als Lösemittel eingesetzt. Es können auch Mischungen mehrerer Substanzen als Lösungsmittel eingesetzt werden. Aus Kosten- und Umweltgründen sollte die Menge an Lösungsmittel auf ein erforderliches Minimum reduziert werden. Konkret sollte der Feststoffgehalt der Lösung zwischen 30 Gew.-% und 80 Gew.-% betragen, bezogen auf das Gesamtgewicht der Lösung.

Der Begriff Feststoffgehalt bezieht sich in diesem Zusammenhang auf die Summe der nicht flüchtigen Komponenten, die sich unter den einschlägigen Trocknungsbedingungen nicht verdampfen lassen. Der Feststoffgehalt wird in Gewichtprozent angegeben.

Unabhängig davon, ob die reaktive Zusammensetzung als trockenes Pulver oder in Lösung bereit gestellt wird, sollten die vorstehend beschriebenen nichtflüchtigen Komponenten der reaktiven Zusammensetzung wie folgt formuliert werden:
∘ zwischen 30 Gew.-% und 70 Gew.-% Härter
∘ zwischen 30 Gew.-% und 70 Gew.-% Binder
∘ mehr als 0 Gew.-% und bis zu 20 Gew.-% Cobindemittel
∘ mehr als 0 Gew.-% und bis zu 20 Gew.-% korrespondierender Härter
∘ zwischen 0 Gew.-% und 5 Gew.-% Additive

Es versteht sich von selbst, dass sich die enthaltenden, nichtflüchtigen Bestandteile in der Summe zu 100 Gew.-% ergänzen. Ein etwaiges Lösemittel wird mithin nicht bei dem Gesamtgewicht berücksichtigt.

Ganz bevorzugt setzt sich die reaktive Zusammensetzung wie folgt zusammen:
∘ als Härter 40 Gew.-% bis 60 Gew.-% eines Uretdions oder einer Mischung mehrerer Uretdione auf Basis von Isophorondiisocyanat (IPDI);
∘ als Binder 25 Gew.-% bis 50 Gew.-% eines Polycaprolactons oder einer Mischung mehrerer Polycaprolactone;
∘ als Cobindemittel 5 Gew.-% bis 15 Gew.-% eines Epoxidharzes, welches ausgewählt ist aus der Gruppe umfassend Epoxidharze auf Basis von Bisphenol A-diglycidylether, Epoxidharze auf Basis von Bisphenol F-diglycidylether und cycloaliphatische Typen wie beispielsweise 3,4-Epoxycyclohexyl-epoxyethan oder 3,4-Epoxycyclohexylmethyl-3,4-epoxy-cyclohexancarboxylat;
∘ als korrespondierender Härter zwischen 2 Gew.-% bis 5 Gew.-% einer Polycarbonsäure und/oder eines Polycarbonsäureanhydrids;
∘ als Additiv zwischen 0 Gew.-% und 1 Gew.-% eines Benetzungsmittels;
wobei sich die enthaltenden nichtflüchtigen Bestandteile in der Summe zu 100 Gew.-% ergänzen.

Sofern die reaktive Zusammensetzung als Lösung bereit gestellt wird, sollte mindestens 98 Gew.-% des Lösemittels aus den Fasern verdampft werde, sodass das Prepreg weniger als 1 Gew.-% Restlösemittelgehalt, bezogen auf das Gesamtgewicht des Prepregs aufweist. Das Prepreg ist dann weitestgehend trocken und kann einfach gehandhabt werden. Im Übrigen wirkt das Lösemittel bei einem höherem Lösungsmittelgehalt als Weichmacher, so dass die Glasübergangstemperatur signifikant sinkt. Ein erhöhter Restlösemittelgehalt könnte also die Glasübergangstemperatur auf Werte unter 30°C absenken. Ein weiterer Vorteil eines geringen Restlösemittelgehalts ist, dass im Zuge der Durchführung der zweiten Vernetzungsreaktion kaum Lösemittel aus dem Prepreg entweicht und unerwünschte Blasenbildung oder Delaminierung hervorruft.

Ein besonders bevorzugtes Prepreg, der nach dem erfindungsgemäßen Verfahren hergestellt wird, weist demnach einen Restgehalt von weniger als 1 Gew.-% an Lösemittel auf, bezogen auf das Gesamtgewicht des Prepregs.

Nachdem ausführlich auf die Chemie der erfindungsgemäß als reaktive Zusammensetzung verwendeten Polyurethan-Formulierung eingegangen wurde, sollen nun die verfahrenstechnischen Aspekte der Erfindung näher erläutert werden.

Die Art und Weise, in der die Fasern bereitgestellt werden, hängt von den verwendeten Fasern und deren Darreichungsform ab. Die Fasern selbst bestehen aus den üblichen Fasermaterialien wie Glas, Kohlenstoff, Aramid. Es können aber auch Fasern aus Basalt, Metall oder organischen Naturmaterialien verwendet werden. Die Fasern können als kurze Stapelfaser oder endlose Filamente vorliegen. Die Fasern werden in der Regel nicht lose, sondern als textiles Flächengebilde und/oder Liniengebilde bereitgestellt. Bei dem textilen Flächengebilde handelt es sich um Gewebe, Gelege, Gewirke, Gestricke, unidirektionale Faserbündel oder Vliese aus dem entsprechenden Fasermaterial. Textile Liniengebilde sind Rovings, Garne oder Geflechte. Aus dem textilen Liniengebilde können wieder textile Flächengebilde aufgebaut sein, etwa wenn ein Garn verwebt wird. Bezüglich der Dimension des textilen Flächengebildes gibt es keine Einschränkung, es können insbesondere auch Tapes oder Bändchen zum Einsatz kommen. Das textile Flächengebilde wird in einzelnen Zuschnitten bereitgestellt, bevorzugt jedoch als Bahnenware von einer Rolle abgewickelt.

Sofern die reaktive Zusammensetzung als trockenes Pulvergemisch eingesetzt wird, erfolgt das Belegen der Fasern mit der Zusammensetzung einfach durch Aufstreuen. Das Aufschmelzen und Anvernetzen (erste Vernetzungsreaktion) erfolgt über Wärmeeintrag, etwa durch Kontaktwärme oder Wärmestrahlung. Durch den Wärmeeintrag wird in geringem Ausmaß die Additionspolymerisation zwischen Härter und Binder ausgelöst. Der Reaktionsumsatz ist unter den gewählten Prozessbedingungen so gering, dass es lediglich zu einem Anstieg des Molekulargewichts, aber noch nicht zu einer Bildung eines dreidimensionalen Netzwerks kommt. Es resultiert daher ein Thermoplast, der sich reversibel aufschmelzen und wieder abkühlen lässt. Aufgrund der Wärme liegt der Thermoplast als niedrigviskose Schmelze vor und dringt in die Zwischenräume zwischen den Fasern ein. Auf diese Weise werden die Fasern in das thermoplastische Polymer eingebettet. Die Pulverroute ist daher besonders umweltfreundlich, da keine Lösemittel eingesetzt und entfernt werden müssen.

Falls die reaktive Zusammensetzung flüssig verarbeitet werden soll, werden Binder und Härter in einem Lösemittel gelöst bereitgestellt. Das Belegen der Fasern bzw. des textilen Flächengebildes erfolgt durch Imprägnierung desselben mit der Lösung. Dies hat gegenüber dem Aufstreuen von Pulver den Vorteil, dass das reaktive Gemisch so auch tief in das textile Flächengebilde eindringt, wodurch die Haftung des Gemisches an dem Textil während der Produktion und später des Faser/Matrix-Verbundes verbessert wird. Deswegen wird eine flüssige Zusammensetzung der Pulvervariante vorgezogen.

Die Imprägnierung der Fasern bzw. des textilen Flächengebildes geschieht durch Tränkung, Tauchen oder sonstige für die Verarbeitung geeignete Verfahren. Maßgeblich ist, dass die Fasern von der Lösung umschlossen werden. Dies wird dann erreicht, wenn die Lösung in die Zwischenräume zwischen den Fasern möglichst vollständig füllt. Grundsätzlich ist es denkbar, nicht die Gesamtheit der Fasern zu imprägnieren sondern lediglich einzelne Faserabschnitte. Bevorzugt erfolgt die Imprägnierung kontinuierlich in einem Rolle-zu-Rolle-Prozess.

Die oben spezifizierten Lösemittel lassen sich nach der Imprägnierung durch Verdampfung wieder leicht aus dem textilen Flächengebilde entfernen. Dafür sind aufgrund der hohen Flüchtigkeit dieser Lösemittel nur geringe Temperaturen erforderlich. Außerdem lassen sich mit diesen Lösemitteln nach der Trocknung vernachlässigbare Restlösemittelgehalte unterhalb von einem Gewichtsprozent, bevorzugt unterhalb von 0,5 Gewichtsprozent, erzielen.

Der Prozessschritt des Verdampfens des Lösemittels und die Durchführung der ersten Vernetzungsreaktion erfolgt bevorzugt in einem Arbeitsschritt durch Wärmeeinwirkung bei einer Temperatur von 80°C bis 170°C, bevorzugt bei einer Temperatur von 120°C bis 160°C, und besonders bevorzugt bei einer Temperatur von 140°C bis 160°C. Die Dauer der Wärmeeinwirkung beträgt eine Minute bis 60 Minuten, vorzugsweise zehn Minuten bis 30 Minuten. Die Beaufschlagung mit Wärme erfolgt am besten berührungslos mit Infrarot-Strahlung oder Wärmestrahlung. Die Wärme kann auch mit einem heißen Gasstrom aufgebracht werden. Die Wärme ruft einerseits das Verdampfen des Lösemittels und zum anderen die Reaktion von Härter und Binder zu dem thermoplastischen Polymer hervor. Da die Fasern mit der Lösung imprägniert waren, werden die Fasern in den entstehenden Thermoplasten tief eingebettet. Wenn die imprägnierten Fasern auf einer Rolle vorliegen, erfolgt das Verdampfen des Lösemittels und das Durchführen der ersten Vernetzungsreaktion am rationellsten auf dieser Rolle, zum Beispiel in einem Durchlaufofen.

Nach Abschluss der ersten Vernetzungsreaktion wird das entstandene Prepreg, also das thermoplastische Polymer mit den darin eingebetteten Fasern, konfektioniert. Dies ist vor allem dann notwendig, wenn das Prepreg von der Rolle kommt. Bei der Konfektionierung wird das thermoplastische Polymer zunächst in einzelne Prepreglagen geschnitten und die einzelne Prepreglagen gestapelt. Die Anzahl der Lagen richtet sich dabei nach der angestrebten Dicke der späteren Versteifung. Es ist auch möglich, in den einzelnen Lagen unterschiedliche Prepregmaterialien einzusetzen. Die vorbereiteten Stapel werden dann in einer Zuschneidvorrichtung auf die erforderliche Geometrie zugeschnitten. Für das Zuschneiden werden gängige Techniken wie Laser- oder Wasserstrahlschneiden eingesetzt. Bevorzugt wird das Zuschneiden so durchgeführt, dass möglichst viel Material genutzt und der Verschnitt reduziert wird. Das thermoplastische Polymer des Verschnitts kann übrigens im Prozess wiederverwertet werden, indem es abgeschmolzen wird. Die dabei freigelegten Fasern können zumindest noch als Kurzschnitt verwendet werden.

Besonders bevorzugt ist also die Herstellung des Prepregs in einem Rolle-zu-Rolle-Prozess, bei der Fasern als textiles Flächengebilde endlos von einer Rolle bereit gestellt werden, dass das textile Flächengebilde kontinuierlich mit der reaktiven Zusammensetzung belegt wird, und dass das mit der reaktiven Zusammensetzung belegte textile Flächengebilde kontinuierlich mit Wärme zwecks Durchführung der ersten Vernetzungsreaktion beaufschlagt wird, sodass das thermoplastische Polymer mit den darin eingebetteten Fasern ein endloses, bandförmiges Prepreg bildet, welches in einzelne Abschnitte geschnitten und die einzelnen Abschnitte in Stapel geschichtet zu einem Laminat verpresst werden.

Wenn das Prepreg entsprechend der Erfindung hergestellt wird, erhält dieses eine temperaturabhängige Oberflächenklebrigkeit, die während seiner Verarbeitung durch Erwärmen bzw. Abkühlen gesteuert werden kann.

Unter dem Begriff "Oberflächenklebrigkeit" wird in der Literatur die Eigenschaft eines Materials bezeichnet sich durch Flächenhaftung, also Adhäsion, mit anderen Werkstoffen zu verbinden. Substanzen werden als "klebrig" beschrieben, wenn sie mit oder ohne zusätzliche Druckeinwirkung an einem anderen Werkstück anhaften. (G. Habenicht, "Kleben- Grundlagen, Technologie, Anwendungen", Springer Verlag Berlin, 2009, S. 199). Die Haftung kann sowohl über mechanische Mechanismen wie Verhaken als auch über physikalische oder chemische Wechselwirkungen, oder eine Kombination beider Phänomene zustande kommen. Die Haftung zu Metallen kann beispielsweise über polare Wechselwirkungen oder Wasserstoffbrückenbindungen erhöht werden. Für eine Klebverbindung ist neben der Klebrigkeit auch eine ausreichende Benetzung des Fügepartners erforderlich.

Die Oberflächenklebrigkeit von dauerklebrigen Stoffen, sogenannten Haftklebstoffen, lässt sich nach der "Schlaufenmethode" nach DIN EN 1719 bestimmen. Demnach ist die Oberflächenklebrigkeit definiert als die Höchstkraft, die erforderlich ist, eine Schlaufe aus einem mit Haftklebstoff beschichteten Material bei festgelegter Geschwindigkeit von einer Fläche definierter Größe und Oberflächenbeschaffenheit, mit der sie vorher in Kontakt gebracht wurde, zu trennen. Als Maß für die Klebrigkeit wird also die erforderliche Abschälkraft herangezogen.

Ein erfindungsgemäß hergestellter Prepreg umfasst demnach ein thermoplastisches Polymer auf Basis von Polyurethan welches aus einer reaktiven Zusammensetzung resultiert, welche die folgenden Komponenten umfasst:
∘ Mindestens einen blockierten Härter, bei welchem es sich bevorzugt um ein intern blockiertes Uretdion handelt, dessen NCO-Funktionalität mindestens zwei beträgt,
∘ mindestens einen Binder, bei welchem es sich um eine Polyolverbindung handelt, dessen OH-Funktionalität drei bis sechs beträgt, und welcher mindestens eine polare funktionale Gruppe aufweist, welche ausgewählt ist aus einer Ester-, Carbonat-, Amid-, Urethan-, Urea-, Thioester- oder Thiocarbonatfunktionalität,
∘ mindestens ein Cobindemittel, bei welchem es sich um ein Epoxidharz handelt,
∘ mindestens ein mit dem Cobindemittel korrespondierender Härter, welcher ausgewählt ist aus der Gruppe umfassend die folgenden Substanzklassen: aliphatische Polyamine, zykloaliphatische Polyamine, Polyetheramine, Polymercaptane oder Polyamidoamine, Polycarbonsäuren, Polycarbonsäureanhydride;
sowie in dem thermoplastischen Polymer eingebettete Fasern und weist eine temperaturabhängige Oberflächenklebrigkeit auf, deren Wert gemäß der in DIN EN 1719 definierten Schlaufenmethode weniger als 1 Newton beträgt, wenn die Temperatur des Prepregs zwischen 15°C und 25°C liegt.

Dies bedeutet, dass der erfindungsgemäß hergestellte Prepreg im kalten Zustand (15°C bis 25°C) praktisch nicht klebrig (Abschälkraft unter 1 N) ist. Ein solcher Prepreg ist ebenfalls Gegenstand der Erfindung.

Bei Überschreiten der Glastemperatur wird der Prepreg nun klebrig. Ein Prepreg, der auf einer erfindungsgemäß zusammengestellten, reaktiven Zusammensetzung beruht, weist eine temperaturabhängige Oberflächenklebrigkeit auf, deren Wert gemäß der in DIN EN 1719 definierten Schlaufenmethode zwischen 5 Newton und 30 Newton beträgt, wenn die Temperatur des Prepregs zwischen 50°C bis 100 °C liegt. Bei einer höheren Temperatur ist die Abschälkraft höher, die Klebrigkeit demnach größer.

Ein erfindungsgemäßes Prepreg wird also bestimmungsgemäß im kalten Zustand (15°C bis 25°C) gelagert, transportiert und gehandhabt ohne ungewollt anzuhaften. Erst vor Ort wird das Prepreg auf 50°C bis 100°C erwärmt, um die gewünschte Klebrigkeit hervorzurufen.

Gegenstand der Erfindung ist mithin auch die Verwendung eines solchen Prepregs bei der Herstellung eines Hybridbauteils, bei der das Prepreg zunächst bei einer Temperatur zwischen 15°C und 25°C gehandhabt und sodann mit einer Temperatur von 50°C bis 100°C ohne Einsatz eines zusätzlichen Klebstoffes auf ein metallisches Werkstück gepresst wird, sodass das Prepreg an dem Werkstück anhaftet.

Aufgrund der guten Metallhaftung des thermoplastischen Prepregs auf dem Metall ist es möglich, das Metall mit anhaften Prepreg noch in die endgültige Gestalt umzuformen, bevor das Prepreg final zum Duroplasten ausgehärtet wird. Eine bevorzugte Verwendung des Prepregs besteht mithin darin, dass das Werkstück mit anhaftenden Prepreg umgeformt wird.

So kann das Prepreg beispielsweise auf ein Blech aus Stahl oder Aluminium platziert und das Blech zusammen mit dem Prepreg tiefgezogen werden. Wenn das Blech seine endgültige Form erhalten hat, wird die zweite Vernetzungsreaktion durchgeführt, welche das thermoplastische Polymer endgültig aushärtet und ein Hybridbauteil mit einer duroplastischen Matrix erhalten wird.

Grundsätzlich haftet die hier beschriebene Polyurethanzusammensetzung auf solchen Metallen gut, die üblicherweise in der Konstruktion von Bauteilen einer Maschine, eines Land-, Luft-, Raum-, oder Wasser-Fahrzeugs, eines Apparats, einer Anlage oder eines Geräts verwendet werden.

Dies sind beispielsweise die im Automobilkarosseriebau eingesetzten Stähle mit einer galvanischen Verzinkung oder Feuerverzinkung und zwar sowohl Kalt- als auch Warmumformstähle, sowie die im Automobilbereich verwendete Aluminiumlegierungen. Konkrete Beispiele sind Stahl DC 04, DC 06 oder DP600 mit ZE 100 oder ZE 140 Verzinkung, Warmumformstahl 22MnB5, Aluminium 6016.

Eine gesondert zu erwähnende Ausführungsform der Erfindung sieht vor, dass das metallische Werkstück aus einem Stahl besteht, dessen Gefüge im Zuge der Durchführung der zweiten Vernetzungsreaktion eine Umwandlung und/oder Veränderung erfährt. Hierbei ändern sich insbesondere die Eigenschaften des metallischen Werkstoffs, wie zum Beispiel die Festigkeit oder Energieaufnahme. Beispielsweise können wärmhärtende Stahlwerkstoffe eingesetzt werden, die aus einer dehnbaren ferritischen Matrix mit darin eingelagerten harten martensitischen oder bainitischen Phasen bestehen.

Die eben erwähnte metallurgische Phasenumwandlung ist ausführlich beschrieben in "Structure and mechanical properties of dual phase steels", Ylva Granbom, Doctoral thesis 2010, Royal Institute of Technology School of Industrial Engineering and Management SE-100 44 Stockholm, Sweden.

Stähle mit einer derartigen Gefügestruktur, welche die Nutzbarkeit dieses metallurgischen Effekts ermöglichen, werden Dualphasen-Stähle (DP) und kommerziell auch als bake-hardening-Stähle (BHZ) bezeichnet. Vorzugsweise werden also im Rahmen des hier beschriebenen Verfahrens ein metallisches Werkstück aus einem bake-hardening-Stahl oder aus einem Dualphasen-Stahl eingesetzt, da die Festigkeit dieser Stähle ebenso wie die der zweistufig vernetzbare Polyurethanzusammensetzung in den beiden Wärmebehandlungsschritten gesteigert werden kann.

In diesem Zusammenhang ist auch vorteilhaft zu erwähnen, dass die Durchführung der zweiten Vernetzungsreaktion, im Zuge derer das thermoplastische Polymer zu einem duroplastischen Polymer umgesetzt wird, in einem Temperaturbereich von 160°C bis 220°C erfolgen kann. Eben in diesem Temperaturbereich lassen sich auch die vorbeschriebenen Dualphasenstähle / bake-hardening-Stähle aushärten. Die beiden Materialveränderungen "Phasenumwandlung des Metalls" und "Endvernetzung der Matrix" können also in einem gemeinsamen Prozessschritt durchgeführt werden, was Zeit und Energie spart.

Aufgrund der engen Zusammenhänge zwischen der Herstellung des Prepregs, der Eigenschaften des so hergestellten Prepregs und dessen Verarbeitung zu dem Hybridbauteil ist auch ein entsprechendes Verfahren zur Herstellung eines Hybridbauteils erfindungsgegenständlich. Dieses umfasst vorzugsweise die folgenden Schritte:
a) Bereitstellen einer reaktiven Zusammensetzung enthaltend die Bestandteile:
   ∘ Mindestens einen blockierten Härter, bei welchem es sich bevorzugt um ein intern blockiertes Uretdion handelt, dessen NCO-Funktionalität mindestens zwei beträgt,
   ∘ mindestens einen Binder, bei welchem es sich um eine Polyolverbindung handelt, dessen OH-Funktionalität drei bis sechs beträgt, und welcher mindestens eine polare funktionale Gruppe aufweist, welche ausgewählt ist aus einer Ester-, Carbonat-, Amid-, Urethan-, Urea-, Thioester- oder Thiocarbonatfunktionalität,
   ∘ mindestens ein Cobindemittel, bei welchem es sich um ein Epoxidharz handelt,
   ∘ mindestens ein mit dem Cobindemittel korrespondierender Härter, welcher ausgewählt ist aus der Gruppe umfassend die folgenden Substanzklassen: aliphatische Polyamine, zykloaliphatische Polyamine, Polyetheramine, Polymercaptane oder Polyamidoamine, Polycarbonsäuren, Polycarbonsäureanhydride;
   wobei eine Polyolverbindung bzw. ein Gemisch mehrerer Polyolverbindungen als Binder eingesetzt wird, deren gemäß DIN 53 240-2 bestimmte OH-Zahl bzw. mittlere OH-Zahl oberhalb von
   300 mg KOH / g liegt,
   und/oder
   wobei der Anteil an korrespondierendem Härter in der reaktiven Zusammensetzung größer als 2 Gew.-% gewählt wird, bezogen auf den gesamten Feststoffgehalt der reaktiven Zusammensetzung;
b) Bereitstellen von Fasern;
c) Belegen der Fasern mit der reaktiven Zusammensetzung;
d) Beaufschlagen zumindest der reaktiven Zusammensetzung mit Wärme zwecks Durchführung einer ersten Vernetzungsreaktion, im Zuge derer Härter und Binder zu einem thermoplastischen Polymer umgesetzt werden, dessen nach der DSC-Methode gemäß DIN 53765 in der zweiten Aufheizkurve bei 10 K/min gemessene Glastemperatur oberhalb von 30°C liegt, wobei die Fasern in das thermoplastische Polymer eingebettet werden;
e) Erhalt eines Prepregs umfassend das thermoplastische Polymer mit den darin eingebetteten Fasern, wobei das Prepreg eine temperaturabhängige Oberflächenklebrigkeit aufweist, deren Wert gemäß der in DIN EN 1719 definierten Schlaufenmethode weniger als 1 Newton beträgt, wenn die Temperatur des Prepregs zwischen 15°C und 25°C liegt, und deren Wert gemäß der in DIN EN 1719 definierten Schlaufenmethode zwischen 5 Newton und 30 Newton beträgt, wenn die Temperatur des Prepregs zwischen 50°C bis 100 °C liegt;
f) Lagern und/oder Transportieren des Prepregs über einen Zeitraum von einem Tag bis zu einem Jahr bei Temperaturen zwischen 15°C und 30°C und sodann:
g) Bereitstellen eines metallischen Werkstücks;
h) Handhaben des Prepregs bei einer Temperatur zwischen 15°C und 25°C
i) Anpressen des Prepregs mit einer Temperatur zwischen 50°C und 100°C auf das metallische Werkstück ohne Einsatz eines Klebstoffes, sodass das Prepreg an dem Werkstück anhaftet:
k) optional: Umformen des Werkstücks mit dem daran anhaften Prepreg;
l) Beaufschlagen des an dem Werkstück haftenden Prepregs mit Wärme zwecks Durchführung einer zweiten Vernetzungsreaktion, im Zuge derer das thermoplastische Polymer zu einem duroplastischen Polymer umgesetzt wird;
m) Erhalt eines Hybridbauteils umfassend das metallische Werkstück mit dem daran anhaftenden duroplastischen Polymer, welches die darin eingebetteten Fasern als Matrix umschließt.

Schließlich ist noch das Verfahrensprodukt, nämlich das auf diese Weise hergestellte Hybridbauteil, Gegenstand der Erfindung.

Technisch interessante Einsatzgebiete solcher Hybridbauteile finden sich überall dort, wo es auf geringe Gewichte, große Steifigkeiten und geringe Materialkosten ankommt. Ein besonders relevanter Einsatzbereich vorliegender Hybridbauteile sind mithin Bestandteile der Karosserien von Automobilen und anderen Landfahrzeugen, wie etwa B-Säulen, Querträger, Längsträger oder Bodengruppen. Aber auch deren Verkleidungsteile, die in klassischer Blechbauweise nicht zu den tragenden Strukturbauteilen gehören, wie etwa Motorhauben oder Türen, kommen als Hybridbauteil in Betracht. Darüber hinaus können Strukturbauteile von Flugzeugen in der hier beschriebenen Weise als Hybridbauteil ausgeführt werden.

### Beispiele

Die Erfindung soll nun anhand von Beispielen näher erläutert werden.

In allen Versuchen wurde als textile Flächengebilde ein Köpergewebe aus Kohlenstofffaser mit einem Flächengewicht von 200 g/m² aus Torayca FT 300 3K 200tex Fasern verwendet.

In dem nicht erfindungsgemäßen Beispiel 1 wurde als Gemisch eine reaktive Polyurethanzusammensetzung gewählt, die als Hauptkomponenten neben Lösungsmittel ausschließlich einen Uretdionhärter und ein Polyetherpolyol (OH-Zahl 475 - 500 mg KOH/g gemäß DIN 53 240-2) enthält, jedoch keinen korrespondierenden Härter. Das Epoxidharz stellt mit 1,1 % kein Cobindemittel dar, sondern dient als Katalysatorkomponente. Die Zusammensetzung ist daher vergleichbar mit Beispiel 2 der DE102011006163A1, das sich ebenfalls ausschließlich aus einem Uretdionhärter und einem Polyetherpoylol (OH-Zahl 630 mg KOH/g gemäß DIN 53 240-2) sowie Additiven und Lösungsmittel zusammensetzt.

Beispiel 2 ist ebenfalls nicht erfindungsgemäß, diese Formulierung führt zu Prepregs, die bereits bei Raumtemperatur (25°C) klebrig sind. Der Anteil an korrespondierendem Härter in dieser Formulierung liegt unter 2 Gewichtsprozent.

Die erfindungsgemäßen Beispiele 3 und 4 beschreiben hingegen Formulierungen mit erhöhter Glasübergangstemperatur, die erst bei Temperaturen oberhalb von 30°C (Raumtemperatur + 5°C) klebrig sind.

Die verwendeten Rezepturen der Beispiele sind in den nachfolgenden Tabellen aufgeführt.

**Tabelle 1: Rezeptur der Polyurethanmatrix des nicht erfindungsgemäßen Beispiels 1**

| Bezeichnung | Einwaage / Gew.-% | Hersteller bzw Lieferant |
|---|---|---|
| Uretdiongruppenhaltiger Härter Vestagon B11604 60% in Aceton (NCO-Gehalt des Uretdions: 14 %) | 72,9 | Evonik |
| Bindemittel: Polyether Polyol Voranol RN 490 (OHZ: 475 - 500 mg KOH/g) | 12,4 | Dow |
| Lösungsmittel Isopropylacetat | 13,2 | Fluka |
| Katalysator VESTAGON SC 5050 (Tetraethylammoniumbenzoat) | 0,3 | Evonik |
| Katalysatorbestandteil Epikote 828 | 1,1 | Hexion |
| Katalysatorbestandteil Oxalsäure | 0,1 | Aldrich |

**Tabelle 2: Rezeptur der Polyurethanmatrix des nicht erfindungsgemäßen Beispiels 2**

| Bezeichnung | Einwaage / Gew.-% | Hersteller bzw Lieferant |
|---|---|---|
| Uretdiongruppenhaltiger Härter Vestagon BF 1320 (NCO-Gehalt: 14 %) | 27,7 | Evonik |
| Bindemittel: vierfunktioneller Polyester Capa 4101 (OHZ: 224 mg KOH/g) | 21,2 | Perstorp |
| Oxirangruppenhaltiges Cobindemittel Epikote Resin 828 | 6,9 | Momentive |
| Polycarbonsäurehärter Aradur 3380 | 1,1 | Huntsman Advanced Materials |
| Additiv TegoWet 500 | 0,3 | Evonik |
| Methylisobutylketon | 21,4 | Fluka |
| Isopropylacetat | 21,4 | Fluka |

**Tabelle 3: Rezeptur der Polyurethanmatrix des erfindungsgemäßen Beispiels 3.**

| Bezeichnung | Einwaage / Gew.-% | Hersteller bzw Lieferant |
|---|---|---|
| Uretdiongruppenhaltiger Härter Vestagon BF 1320 (NCO-Gehalt: 14 %) | 34,2 | Evonik |
| Bindemittel: vierfunktioneller Polyester Capa 4101 (OHZ: 224 mg KOH/g) | 18,8 | Perstorp |
| Oxirangruppenhaltiges Cobindemittel Epikote Resin 828 | 6 | Momentive |
| Polycarbonsäurehärter Aradur 3380 | 5,8 | Huntsman Advanced Materials |
| Additiv TegoWet 500 | 0,4 | Evonik |
| Methylisobutylketon | 17,4 | Fluka |
| Isopropylacetat | 17,4 | Fluka |

**Tabelle 4: Rezeptur der Polyurethanmatrix des erfindungsgemäßen Beispiels 4.**

| Bezeichnung | Einwaage / Gew.-% | Hersteller bzw Lieferant |
|---|---|---|
| Uretdiongruppenhaltiger Härter Vestagon BF 1320 (NCO-Gehalt: 14 %) | 12,5 | Evonik |
| Uretdiongruppenhaltiger Härter Vestagon B11604 60% in Isopropylacetat (NCO-Gehalt des Uretdions: 14 %) | 33,1 | Evonik |
| Bindemittel: vierfunktioneller Polyester Capa 4101 (OHZ: 224 mg KOH/g) | 9,5 | Perstorp |
| Bindemittel: vierfunktioneller Polyester Capa 3031 (OHZ: 560 mg KOH/g) | 5,8 | Perstorp |
| Oxirangruppenhaltiges Cobindemittel Epikote Resin 828 | 6,0 | Momentive |
| Polycarbonsäurehärter Aradur 3380 | 2,2 | Huntsman Advanced Materials |
| Additiv TegoWet 500 | 0,1 | Evonik |
| Lösungsmittel Methylisobutylketon | 15,4 | Fluka |
| Lösungsmittel Isopropylacetat | 15,4 | Fluka |

Die Einsatzstoffe aus den Tabellen wurden jeweils mittels Dissolver bei Temperaturen von maximal 50°C zu einer homogenen Lösung verarbeitet.

Zur Belegung des textilen Flächengebildes mit der Polyurethanmatrix wurde das Kohlenstofffasergewebe mit der Lösung imprägniert und dann in einem Ofen bei 150°C für 10 Minuten getrocknet.

Anschließend wurden jeweils vier Lagen des Prepregs auf eine Abmessung von 20x20 cm² zugeschnitten und gestapelt. Die vorbereiteten Stapel wurden mit einer Laborpresse LaboPress P 400 S der Firma Vogt bei einer Temperatur von 150 °C und einem Druck von 3 bar für 3 Minuten verpresst.

Die entstandenen Laminate wurden anschließend auf Stahlbleche der Abmessung 10x10 cm² des Typs DP600 gelegt und mit einer Gummirolle angepresst. Für jede der angegebenen vier Formulierungen wurden jeweils ein Stahlblech bei Raumtemperatur und eines nach Erwärmung auf 50°C für 15 Minuten in einem Umlufttrockenschrank verwendet. Eine Vorbehandlung der Metalloberflächen fand nicht statt. Zur Abschätzung der Haftung wurde der Verbund nach vollständigem Abkühlen auf Raumtemperatur 360° um die eigene Achse rotiert.

Bei Beispiel 1 löste sich das Faserverbundmaterial bei Rotation von der Metalloberfläche, unabhängig davon, ob das Blech zuvor vorgewärmt oder nicht vorgewärmt worden war. Bei Beispiel 2 war eine gute Haftung zu dem nicht vorgewärmten Blech zu beobachten. Bei dem vorgewärmten Blech besteht noch eine geringe Klebrigkeit. Die verbesserte Klebrigkeit bei Raumtemperatur lässt sich einerseits darauf zurückführen, dass der Anteil an flüssigem Polyol gegenüber Beispiel 1 deutlich erhöht wurde. Dadurch ergibt sich eine niedrigere Erweichungstemperatur und somit eine erhöhte Klebrigkeit bei Raumtemperatur. Zudem handelt es sich bei dem Polyol in Beispiel 1 um ein Polyetherpolyol, in Beispiel 2 wird ein Polyesterpoylol eingesetzt. Letzteres weist aufgrund der polaren Estergruppen eine höhere Haftung zu Metalloberflächen auf als Polyether. Nachteilig an Beispiel 2 ist, dass bei beiden Temperaturen jeweils auch die freiliegende Seite des Faserverbundmaterials klebrig ist. Daher muss beim Anpressen mittels Gummirolle mit Trennfolien aus PTFE gearbeitet werden, was einen erhöhten Arbeitsaufwand bedeutet.

Beispiel 3 enthält im Vergleich zu Beispiel 2 eine deutlich erhöhte Menge an korrespondierendem Härter von über 2 Gewichtsprozent. Durch die hohe Glasübergangstemperatur der Einzelkomponente und eine stärkere Anvernetzung beim Verpressen steigt die Glasübergangstemperatur der Gesamtformulierung gemäß DIN 53765 von unter 20°C auf 63°C. Auf diese Weise lässt sich die Klebrigkeit im Temperaturbereich zwischen 50°C und 80°C gezielt steuern. Während bei Raumtemperatur keine Klebrigkeit besteht, wird das Prepreg bei 50°C kurz unterhalb der Glasübergangstemperatur leicht, und bei 80°C schließlich stark klebrig.

Beispiel 4 enthält im Vergleich zu Beispiel 2 ein weiteres Polyol, das eine deutlich erhöhte OH-Zahl gegenüber dem ersten Polyol aufweist. Aufgrund der Stöchiometrie wird daher anteilig mehr Uretdionhärter mit einer hohen Glasübergangstemperatur eingesetzt. Wie in Beispiel 3 kommt es gegenüber Beispiel 2 daher zu einer Erhöhung der Glasübergangstemperatur der Gesamtformulierung auf größer 30°C.

In beiden Beispielformulierungen 3 und 4 wurde jeweils eine Ablösung des Prepregstapels von dem nicht erwärmten Blech beobachtet. Nach Vorwärmen des Bleches war jedoch keine Ablösung bei Rotation zu beobachten. Die Klebrigkeit und somit die Haftung lässt sich bei beiden Formulierungen über die Temperatur der Metalloberfläche steuern. Die freiliegende Seite des Faserverbundmaterials ist nicht klebrig, so dass keine PTFE-Folie erforderlich ist.

Die Hybrid-Bleche wurden anschließend bei einer Temperatur von 200°C innerhalb von 30 Minuten in einem Ofen ohne zusätzliche Fixierung ausgehärtet. Die Haftung zum metallischen Grundkörper blieb bei den Beispielen 2, 3 und 4 erhalten.

### Loop Tack Test in Anlehnung an die DIN EN 1719:

Für eine Quantifizierung der Klebrigkeit wurde die Haftung in Anlehnung an die Schlaufenmethode DIN EN 1719 bestimmt.

Es wurden Stahlbleche des Typs DP600 mit der Abmessung 10x10 cm² und Prepregstreifen der Beispiele 1, 2, 3 und 4 mit der Dimension 20 x 2,5 cm² bereitgestellt. Die Bleche wurden mittels einer Heizvorrichtung auf 23°C, 50°C und 80°C temperiert. Die Temperaturgenauigkeit betrug +/-0,5°C. Die Messungen wurden bei einer Raumtemperatur von 22,5°C und einer Luftfeuchte von 55% durchgeführt.

Der jeweilige Prepregstreifen wurde auf einer Fläche von 25x25 mm² mit einem Druck von 1 bar/cm² (entspricht 61N/6,25 cm²) für 30s an die Oberfläche des Fügepartners angepresst. Die beiden Enden des Streifens wurden fixiert und der Streifen an beiden Seiten in 90°-Winkel zur Oberfläche des Fügepartners mit einer Geschwindigkeit von 5 mm/s gezogen. Ausgewertet wurde die jeweils benötigte maximale Kraft in Newton um den Prepregstreifen von der Metalloberfläche zu lösen. Hierfür wurde der stabile Messbereich außerhalb des Anfangs- und Endbereichs ermittelt. Tabelle 4 zeigt die Maximalkraft in Abhängigkeit von der Temperatur. Diese quantitativen Ergebnisse bestätigen die Beobachtung aus den beschriebenen Versuchen, dass die Klebrigkeit bei den erfindungsgemäßen Beispielen 3 und 4 nur bei einer Temperatur von 50°C und darüber, jedoch nicht bei Raumtemperatur gegeben ist. Beispiel 2 zeigt diese temperaturabhängige Klebrigkeit nicht, Beispiel 1 weist lediglich bei 80°C eine sehr geringe Klebrigkeit auf.

**Tabelle 4: Maximal benötigte Kraft in N zum Ablösen des Prepregstreifens von der Metalloberfläche gemäß Schlaufenmethode DIN EN 1719.**

| | 25°C | 50°C | 80°C |
|---|---|---|---|
| Beispiel 1 | Nicht messbar | Nicht messbar | 5,0 |
| Beispiel 2 | 28,3 | 5,2 | Nicht gemessen |
| Beispiel 3 | Nicht messbar | 8,1 | 15,8 |
| Beispiel 4 | Nicht messbar | 5,0 | 20,2 |

## Patentansprüche

1. Verfahren zur Herstellung eines Prepregs umfassend die Schritte:
a) Bereitstellen einer reaktiven Zusammensetzung enthaltend zumindest die folgenden Bestandteile:
∘ Mindestens einen blockierten Härter, bei welchem es sich bevorzugt um ein intern blockiertes Uretdion handelt, dessen NCO-Funktionalität mindestens zwei beträgt,
∘ mindestens einen Binder, bei welchem es sich um eine Polyolverbindung handelt, dessen OH-Funktionalität drei bis sechs beträgt, und welcher mindestens eine polare funktionale Gruppe aufweist, welche ausgewählt ist aus einer Ester-, Carbonat-, Amid-, Urethan-, Urea-, Thioester- oder Thiocarbonatfunktionalität,
∘ mindestens ein Cobindemittel, bei welchem es sich um ein Epoxidharz handelt,
∘ mindestens ein mit dem Cobindemittel korrespondierender Härter, welcher ausgewählt ist aus der Gruppe umfassend die folgenden Substanzklassen: aliphatische Polyamine, zykloaliphatische Polyamine, Polyetheramine, Polymercaptane oder Polyamidoamine, Polycarbonsäuren, Polycarbonsäureanhydride;
b) Bereitstellen von Fasern;
c) Belegen der Fasern mit der reaktiven Zusammensetzung;
d) Beaufschlagen zumindest der reaktiven Zusammensetzung mit Wärme zwecks Durchführung einer ersten Vernetzungsreaktion, im Zuge derer Härter und Binder zu einem thermoplastischen Polymer umgesetzt werden, wobei die Fasern in das thermoplastische Polymer eingebettet werden;
e) Erhalt eines Prepregs umfassend das thermoplastische Polymer mit den darin eingebetteten Fasern,
**dadurch gekennzeichnet,**
**dass** die reaktive Zusammensetzung dergestalt bereitgestellt wird, dass die nach der DSC-Methode gemäß DIN 53765 in der zweiten Aufheizkurve bei 10 K/min gemessene Glasübergangstemperatur des thermoplastischen Polymers oberhalb von 30°C liegt, indem
i) eine Polyolverbindung bzw. ein Gemisch mehrerer Polyolverbindungen als Binder eingesetzt wird, deren gemäß DIN 53 240-2 bestimmte OH-Zahl bzw. mittlere OH-Zahl oberhalb von 300 mg KOH / g liegt,
und/oder
ii) der Anteil an korrespondierendem Härter in der reaktiven Zusammensetzung größer als 2 Gew.-% gewählt wird, bezogen auf den gesamten Feststoffgehalt der reaktiven Zusammensetzung.

2. Verfahren nach Anspruch 1, **dadurch gekennzeichnet, dass** als Härter blockierungsmittelfreie Uretdione eingesetzt werden, welche hergestellt sind aus mindestens einer der folgenden Substanzen:
Isophorondiisocyanat (IPDI), Hexamethylendiisocyanat (HDI), Diisocyanatodicyclohexylmethan (H12MDI), 2-Methylpentandiisocyanat (MPDI), Gemische aus 2,2,4-Trimethylhexamethylendiisocyanat und 2,4,4- Trimethylhexamethylendiisocyanat (TMDI), Norbornandiisocyanat (NBDI).

3. Verfahren nach Anspruch 1 oder nach Anspruch 2, **dadurch gekennzeichnet, dass** als Binder mindestens ein Polyesterpolyol eingesetzt wird, dessen gemäß DIN 53 240-2 bestimmte OH-Zahl zwischen 20 mg KOH / g und 500 mg KOH / g liegt und dessen gemäß DIN EN ISO 2114 bestimmte Säurezahl höchstens 2 mg KOH / g beträgt.

4. Verfahren nach Anspruch 1 oder nach Anspruch 2, **dadurch gekennzeichnet, dass** als Binder mindestens ein Polycaprolacton eingesetzt wird, dessen gemäß DIN 53 240-2 bestimmte OH-Zahl zwischen 20 mg KOH / g und 1000 mg KOH / g liegt und dessen gemäß DIN EN ISO 2114 bestimmte Säurezahl höchstens 2 mg KOH / g beträgt.

5. Verfahren nach Anspruch 1 oder nach einem der Ansprüche 2 bis 4,
**dadurch gekennzeichnet, dass** als Cobindemittel Epoxidharze eingesetzt werden, welche ausgewählt sind aus der Gruppe umfassend Epoxidharze auf Basis von Bisphenol A-diglycidylether, Epoxidharze auf Basis von Bisphenol F-diglycidylether und cycloaliphatische Typen wie beispielsweise 3,4-Epoxycyclohexyl-epoxyethan oder 3,4-Epoxycyclohexylmethyl-3,4-epoxy-cyclohexancarboxylat.

6. Verfahren nach Anspruch 1 oder nach einem der Ansprüche 2 bis 5,
**dadurch gekennzeichnet, dass** die Zusammensetzung als weitere Komponente mindestens ein Additiv enthält, beispielsweise einen Rheologiemodifizierer, ein Benetzungsmittel, ein Farbpigment, einen Entschäumer, ein Trennmittel, einen Füllstoff, einen Entlüfter, einen Schlagzähmodifizierer, ein Fließhilfsmittel, ein Verlaufshilfsmittel, ein Flammschutzmittel.

7. Verfahren nach Anspruch 1 oder nach einem der Ansprüche 2 bis 6,
**dadurch gekennzeichnet, dass** die Zusammensetzung als trockenes Pulver bereitgestellt wird, sodass das Belegen der Fasern mit der Zusammensetzung dadurch erfolgt, dass das Pulver auf die Fasern aufgestreut und/oder aufgeschmolzen wird.

8. Verfahren nach Anspruch 1 oder nach einem der Ansprüche 2 bis 6,
**dadurch gekennzeichnet, dass** die Zusammensetzung in einem flüssigen Lösemittel bereitgestellt wird, wobei die Bestandteile der Zusammensetzung in dem Lösemittel gelöst und/oder suspendiert und/oder dispergiert sind, sodass das Belegen der Fasern mit der Zusammensetzung dadurch erfolgt, dass die Fasern mit dem Lösemittel und der darin gelösten bzw. suspendierten bzw. dispergierten Bestandteile imprägniert werden, und dass das Lösemittel im Zuge der Durchführung der ersten Vernetzungsreaktion zumindest teilweise aus den Fasern verdampft wird.

9. Verfahren nach Anspruch 8, **dadurch gekennzeichnet, dass** es sich bei dem Lösemittel um einen Ester oder um ein Keton oder um ein Gemisch handelt, welches mindestens einen Ester und/oder mindestens ein Keton enthält.

10. Verfahren nach Anspruch 8 oder 9, **dadurch gekennzeichnet, dass** der Feststoffgehalt der Lösung zwischen 30 Gew.-% und 80 Gew.-% beträgt, bezogen auf das Gesamtgewicht der Lösung.

11. Verfahren nach Anspruch 1 oder nach einem der Ansprüche 2 bis 10, **dadurch gekennzeichnet, dass** die reaktive Zusammensetzung an nichtflüchtigen Bestandteilen
∘ zwischen 30 Gew.-% und 70 Gew.-% Härter
∘ zwischen 30 Gew.-% und 70 Gew.-% Binder
∘ mehr als 0 Gew.-% und bis zu 20 Gew.-% Cobindemittel
∘ mehr als 0 Gew.-% und bis zu 20 Gew.-% korrespondierender Härter
∘ zwischen 0 Gew.-% und 5 Gew.-% Additive
enthält, wobei sich die enthaltenden, nichtflüchtigen Bestandteile in der Summe zu 100 Gew.-% ergänzen.

12. Verfahren nach Anspruch 11, **dadurch gekennzeichnet, dass** die reaktive Zusammensetzung
∘ als Härter 40 Gew.-% bis 60 Gew.-% eines Uretdions oder einer Mischung mehrerer Uretdione auf Basis von Isophorondiisocyanat (IPDI);
∘ als Binder 25 Gew.-% bis 50 Gew.-% eines Polycaprolactons oder einer Mischung mehrerer Polycaprolactone;
∘ als Cobindemittel 5 Gew.-% bis 15 Gew.-% eines Epoxidharzes, welches ausgewählt ist aus der Gruppe umfassend Epoxidharze auf Basis von Bisphenol A-diglycidylether, Epoxidharze auf Basis von Bisphenol F-diglycidylether und cycloaliphatische Typen wie beispielsweise 3,4-Epoxycyclohexyl-epoxyethan oder 3,4-Epoxycyclohexylmethyl-3,4-epoxy-cyclohexancarboxylat;
∘ als korrespondierender Härter zwischen 2 Gew.-% bis 5 Gew.-% einer Polycarbonsäure und/oder eines Polycarbonsäureanhydrids;
∘ als Additiv zwischen 0 Gew.-% und 1 Gew.-% eines Benetzungsmittels;
enthält, wobei sich die enthaltenden nichtflüchtigen Bestandteile in der Summe zu 100 Gew.-% ergänzen.

13. Verfahren nach Anspruch 8 oder nach einem der Ansprüche 9 bis 12, **dadurch gekennzeichnet, dass** mindestens 98 Gew.-% des Lösemittels aus den Fasern verdampft wird.

14. Verfahren nach Anspruch 1 oder nach einem der Ansprüche 2 bis 13, **dadurch gekennzeichnet, dass** die Fasern als textiles Flächengebilde endlos von einer Rolle bereit gestellt werden, dass das textile Flächengebilde kontinuierlich mit der reaktiven Zusammensetzung belegt wird, und dass das mit der reaktiven Zusammensetzung belegte textile Flächengebilde kontinuierlich mit Wärme zwecks Durchführung der ersten Vernetzungsreaktion beaufschlagt wird, sodass das thermoplastische Polymer mit den darin eingebetteten Fasern ein endloses, bandförmiges Prepreg bildet, welches in einzelne Abschnitte geschnitten und die einzelnen Abschnitte in Stapel geschichtet zu einem Laminat verpresst werden.

15. Prepreg umfassend ein thermoplastisches Polymer auf Basis von Polyurethan und darin eingebettete Fasern, wobei das Polyurethan aus einer reaktiven Zusammensetzung resultiert, welche die folgenden Komponenten umfasst:
∘ Mindestens einen blockierten Härter, bei welchem es sich bevorzugt um ein intern blockiertes Uretdion handelt, dessen NCO-Funktionalität mindestens zwei beträgt,
∘ mindestens einen Binder, bei welchem es sich um eine Polyolverbindung handelt, dessen OH-Funktionalität drei bis sechs beträgt, und welcher mindestens eine polare funktionale Gruppe aufweist, welche ausgewählt ist aus einer Ester-, Carbonat-, Amid-, Urethan-, Urea-, Thioester- oder Thiocarbonatfunktionalität,
∘ mindestens ein Cobindemittel, bei welchem es sich um ein Epoxidharz handelt,
∘ mindestens ein mit dem Cobindemittel korrespondierender Härter, welcher ausgewählt ist aus der Gruppe umfassend die folgenden Substanzklassen: aliphatische Polyamine, zykloaliphatische Polyamine, Polyetheramine, Polymercaptane oder Polyamidoamine, Polycarbonsäuren, Polycarbonsäureanhydride;
**dadurch gekennzeichnet, dass** das Prepreg eine temperaturabhängige Oberflächenklebrigkeit aufweist, deren Wert gemäß der in DIN EN 1719 definierten Schlaufenmethode weniger als 1 Newton beträgt, wenn die Temperatur des Prepregs zwischen 15°C und 25°C liegt.

16. Prepreg nach Anspruch 15, **dadurch gekennzeichnet, dass** das Prepreg eine temperaturabhängige Oberflächenklebrigkeit aufweist, deren Wert gemäß der in DIN EN 1719 definierten Schlaufenmethode zwischen 5 Newton und 30 Newton beträgt, wenn die Temperatur des Prepregs zwischen 50°C bis 100 °C liegt.

17. Prepreg nach Anspruch 15 oder nach Anspruch 16, hergestellt nach Anspruch 1 oder einem der Ansprüche 2 bis 14.

18. Prepreg nach Anspruch 15 oder nach Anspruch 16, hergestellt nach Anspruch 8 oder einem der Ansprüche 9 bis 14, **dadurch gekennzeichnet, dass** das Prepreg einen Restgehalt von weniger als 1 Gew.-% an Lösemittel aufweist, bezogen auf das Gesamtgewicht des Prepregs.

19. Verwendung eines Prepregs nach einem der Ansprüche 15 bis 18 bei der Herstellung eines Hybridbauteils, bei der das Prepreg zunächst bei einer Temperatur zwischen 15°C und 25°C gehandhabt und sodann mit einer Temperatur von 50°C bis 100°C ohne Einsatz eines zusätzlichen Klebstoffes auf ein metallisches Werkstück gepresst wird, sodass das Prepreg an dem Werkstück anhaftet.

20. Verwendung nach Anspruch 19, bei der das Werkstück mit anhaftenden Prepreg umgeformt wird.

21. Verwendung nach Anspruch 19 oder 20, bei der das auf dem Werkstück anhaftende Prepreg zwecks Durchführung einer zweiten Vernetzungsreaktion mit Wärme in einem Temperaturbereich von 160°C bis 220°C beaufschlagt wird, im Zuge derer das thermoplastische Polymer zu einem duroplastischen Polymer umgesetzt wird.

22. Verfahren zur Herstellung eines Hybridbauteils umfassend die Schritte:
a) Bereitstellen einer reaktiven Zusammensetzung enthaltend die Bestandteile:
∘ Mindestens einen blockierten Härter, bei welchem es sich bevorzugt um ein intern blockiertes Uretdion handelt, dessen NCO-Funktionalität mindestens zwei beträgt,
∘ mindestens einen Binder, bei welchem es sich um eine Polyolverbindung handelt, dessen OH-Funktionalität drei bis sechs beträgt, und welcher mindestens eine polare funktionale Gruppe aufweist, welche ausgewählt ist aus einer Ester-, Carbonat-, Amid-, Urethan-, Urea-, Thioester- oder Thiocarbonatfunktionalität,
∘ mindestens ein Cobindemittel, bei welchem es sich um ein Epoxidharz handelt,
∘ mindestens ein mit dem Cobindemittel korrespondierender Härter, welcher ausgewählt ist aus der Gruppe umfassend die folgenden Substanzklassen: aliphatische Polyamine, zykloaliphatische Polyamine, Polyetheramine, Polymercaptane oder Polyamidoamine, Polycarbonsäuren, Polycarbonsäureanhydride;
wobei eine Polyolverbindung bzw. ein Gemisch mehrerer Polyolverbindungen als Binder eingesetzt wird, deren gemäß DIN 53 240-2 bestimmte OH-Zahl bzw. mittlere OH-Zahl oberhalb von 300 mg KOH / g liegt,
und/oder
wobei der Anteil an korrespondierendem Härter in der reaktiven Zusammensetzung größer als 2 Gew.-% gewählt wird, bezogen auf den gesamten Feststoffgehalt der reaktiven Zusammensetzung;
b) Bereitstellen von Fasern;
c) Belegen der Fasern mit der reaktiven Zusammensetzung;
d) Beaufschlagen zumindest der reaktiven Zusammensetzung mit Wärme zwecks Durchführung einer ersten Vernetzungsreaktion, im Zuge derer Härter und Binder zu einem thermoplastischen Polymer umgesetzt werden, dessen nach der DSC-Methode gemäß DIN 53765 in der zweiten Aufheizkurve bei 10 K/min gemessene Glastemperatur oberhalb von 30°C liegt, wobei die Fasern in das thermoplastische Polymer eingebettet werden;
e) Erhalt eines Prepregs umfassend das thermoplastische Polymer mit den darin eingebetteten Fasern, wobei das Prepreg eine temperaturabhängige Oberflächenklebrigkeit aufweist, deren Wert gemäß der in DIN EN 1719 definierten Schlaufenmethode weniger als 1 Newton beträgt, wenn die Temperatur des Prepregs zwischen 15°C und 25°C liegt, und deren Wert gemäß der in DIN EN 1719 definierten Schlaufenmethode zwischen 5 Newton und 30 Newton beträgt, wenn die Temperatur des Prepregs zwischen 50°C bis 100 °C liegt;
f) Lagern und/oder Transportieren des Prepregs über einen Zeitraum von einem Tag bis zu einem Jahr bei Temperaturen zwischen 15°C und 30°C und sodann:
g) Bereitstellen eines metallischen Werkstücks;
h) Handhaben des Prepregs bei einer Temperatur zwischen 15°C und 25°C
i) Anpressen des Prepregs mit einer Temperatur zwischen 50°C und 100°C auf das metallische Werkstück ohne Einsatz eines Klebstoffes, sodass das Prepreg an dem Werkstück anhaftet:
n) optional: Umformen des Werkstücks mit dem daran anhaften Prepreg;
o) Beaufschlagen des an dem Werkstück haftenden Prepregs mit Wärme zwecks Durchführung einer zweiten Vernetzungsreaktion, im Zuge derer das thermoplastische Polymer zu einem duroplastischen Polymer umgesetzt wird;
p) Erhalt eines Hybridbauteils umfassend das metallische Werkstück mit dem daran anhaftenden duroplastischen Polymer, welches die darin eingebetteten Fasern als Matrix umschließt.

23. Hybridbauteil, hergestellt nach Anspruch 22.

## Claims

1. Process for producing a prepreg, comprising the steps of:
a) providing a reactive composition comprising at least the following constituents:
∘ at least one blocked hardener which is preferably an internally blocked uretdione having an NCO functionality of at least two,
∘ at least one binder which is a polyol compound having an OH functionality of 3 to 6 and which has at least one polar functional group selected from an ester, carbonate, amide, urethane, urea, thioester or thiocarbonate functionality;
∘ at least one co-binder which is an epoxy resin,
∘ at least one hardener which corresponds to the co-binder and is selected from the group comprising the following substance classes: aliphatic polyamines, cycloaliphatic polyamines, polyetheramines, polymercaptans or polyamidoamines, polycarboxylic acids, polycarboxylic anhydrides;
b) providing fibres;
c) coating the fibres with the reactive composition;
d) exposing at least the reactive composition to heat to perform a first crosslinking reaction, in the course of which hardener and binder are converted to a thermoplastic polymer, the fibres being embedded into the thermoplastic polymer;
e) obtaining a prepreg comprising the thermoplastic polymer with the fibres embedded therein, **characterized in that**
the reactive composition is provided in such a way that the glass transition temperature, measured by the DSC method according to DIN 53765 in the second heating curve at 10 K/min, of the thermoplastic polymer is above 30°C,
through
i) use of a polyol compound or a mixture of a number of polyol compounds as binder, the OH number determined according to DIN 53 240-2 or mean OH number of which is above 300 mg KOH/g,
and/or
ii) choice of the proportion of corresponding hardener in the reactive composition at greater than 2% by weight, based on the total solids content of the reactive composition.

2. Process according to Claim 1, **characterized in that** hardeners used are uretdiones which are free of blocking agents and are prepared from at least one of the following substances:
isophorone diisocyanate (IPDI), hexamethylene diisocyanate (HDI), diisocyanatodicyclohexylmethane (H12MDI), 2-methylpentane diisocyanate (MPDI), mixtures of 2,2,4-trimethylhexamethylene diisocyanate and 2,4,4-trimethylhexamethylene diisocyanate (TMDI), and norbornane diisocyanate (NBDI).

3. Process according to Claim 1 or Claim 2
**characterized in that** the binder used is at least one polyester polyol having an OH number determined according to DIN 53 240-2 between 20 mg KOH/g and 500 mg KOH/g and an acid number determined according to DIN EN ISO 2114 of not more than 2 mg KOH/g.

4. Process according to Claim 1 or Claim 2, **characterized in that** the binder used is at least one polycaprolactone having an OH number determined according to DIN 53 240-2 between 20 mg KOH/g and 1000 mg KOH/g and an acid number determined according to DIN EN ISO 2114 of not more than 2 mg KOH/g.

5. Process according to Claim 1 or according to any of Claims 2 to 4,
**characterized in that** co-binders used are epoxy resins selected from the group comprising epoxy resins based on bisphenol A diglycidyl ether, epoxy resins based on bisphenol F diglycidyl ether and cycloaliphatic types, for example 3,4-epoxycyclohexylepoxyethane or 3,4-epoxycyclohexylmethyl 3,4-epoxycyclohexanecarboxylate.

6. Process according to Claim 1 or according to any of Claims 2 to 5,
**characterized in that** the composition comprises, as further component, at least one additive, for example a rheology modifier, a wetting agent, a colour pigment, a defoamer, a release agent, a filler, a deaerator, an impact modifier, a flow auxiliary, a levelling auxiliary, a flame retardant.

7. Process according to Claim 1 or according to any of Claims 2 to 6,
**characterized in that** the composition is provided as a dry powder, and so the coating of the fibres with the composition is effected by scattering and/or melting the powder onto the fibres.

8. Process according to Claim 1 or according to any of Claims 2 to 6,
**characterized in that** the composition is provided in a liquid solvent, the constituents of the composition being dissolved and/or suspended and/or dispersed in the solvent, such that the fibres are coated with the composition by impregnating the fibres with the solvent and the constituents dissolved/suspended/dispersed therein, and **in that** the solvent is at least partly evaporated out of the fibres in the course of performance of the first crosslinking reaction.

9. Process according to Claim 8, **characterized in that** the solvent is an ester or a ketone or a mixture comprising at least one ester and/or at least one ketone.

10. Process according to Claim 8 or 9, **characterized in that** the solids content of the solution is between 30% by weight and 80% by weight, based on the total weight of the solution.

11. Process according to Claim 1 or according to any of Claims 2 to 10, **characterized in that** the nonvolatile constituents present in the reactive composition are
∘ between 30% by weight and 70% by weight of hardener
∘ between 30% by weight and 70% by weight of binder
∘ more than 0% by weight and up to 20% by weight of co-binder
∘ more than 0% by weight and up to 20% by weight of corresponding hardener
∘ between 0% by weight and 5% by weight of additives,
where the nonvolatile constituents present add up to 100% by weight.

12. Process according to Claim 11, **characterized in that** the reactive composition comprises
∘ as hardener 40% by weight to 60% by weight of a uretdione or a mixture of two or more uretdiones based on isophorone diisocyanate (IPDI);
∘ as binder 25% by weight to 50% by weight of a polycaprolactone or a mixture of two or more polycaprolactones;
∘ as co-binder 5% by weight to 15% by weight of an epoxy resin selected from the group comprising epoxy resins based on bisphenol A diglycidyl ether, epoxy resins based on bisphenol F diglycidyl ether and cycloaliphatic types, for example 3,4-epoxycyclohexylepoxyethane or 3,4-epoxycyclohexylmethyl 3,4-epoxycyclohexanecarboxylate;
∘ as corresponding hardener between 2% by weight and 5% by weight of a polycarboxylic acid and/or a polycarboxylic anhydride;
∘ as additive between 0% by weight and 1% by weight of a wetting agent;
where the nonvolatile constituents present add up to 100% by weight.

13. Process according to Claim 8 or according to any of Claims 9 to 12, **characterized in that** at least 98% by weight of the solvent has evaporated out of the fibres.

14. Process according to Claim 1 or according to any of Claims 2 to 13, **characterized in that** the fibres are provided continuously from a roll as a textile fabric, **in that** the textile fabric is coated continuously with the reactive composition, and **in that** the textile fabric coated with the reactive composition is exposed continuously to heat to perform the first crosslinking reaction, such that the thermoplastic polymer with the fibres embedded therein forms a continuous prepreg in the form of a strip which is cut into individual sections and the individual sections are layered in a stack and pressed to form a laminate.

15. Prepreg comprising a thermoplastic polymer based on polyurethane and fibres embedded therein, wherein the polyurethane results from a reactive composition comprising the following components:
∘ at least one blocked hardener which is preferably an internally blocked uretdione having an NCO functionality of at least two,
∘ at least one binder which is a polyol compound having an OH functionality of 3 to 6 and which has at least one polar functional group selected from an ester, carbonate, amide, urethane, urea, thioester or thiocarbonate functionality;
∘ at least one co-binder which is an epoxy resin,
∘ at least one hardener which corresponds to the co-binder and is selected from the group comprising the following substance classes: aliphatic polyamines, cycloaliphatic polyamines, polyetheramines, polymercaptans or polyamidoamines, polycarboxylic acids, polycarboxylic anhydrides;
**characterized in that** the prepreg has a temperature-dependent surface tack having a value according to the loop method defined in DIN EN 1719 of less than 1 newton when the temperature of the prepreg is between 15°C and 25°C.

16. Prepreg according to Claim 15, **characterized in that** the prepreg has a temperature-dependent surface tack having a value according to the loop method defined in DIN EN 1719 of between 5 newtons and 30 newtons when the temperature of the prepreg is between 50°C and 100°C.

17. Prepreg according to Claim 15 or according to Claim 16, produced according to Claim 1 or any of Claims 2 to 14.

18. Prepreg according to Claim 15 or according to Claim 16, produced according to Claim 8 or any of Claims 9 to 14, **characterized in that** the prepreg has a residual solvent content of less than 1% by weight, based on the total weight of the prepreg.

19. Use of a prepreg according to any of Claims 15 to 18 in the production of a hybrid component, in which the prepreg is first handled at a temperature between 15°C and 25°C and then pressed onto a metallic workpiece at a temperature of 50°C to 100°C without using an additional adhesive, such that the prepreg sticks to the workpiece.

20. Use according to Claim 19, in which the workpiece with the prepreg stuck to it is formed.

21. Use according to Claim 19 or 20, in which the prepreg stuck to the workpiece, to perform a second crosslinking reaction, is exposed to heat within a temperature range from 160°C to 220°C, in the course of which the thermoplastic polymer is converted to a thermoset polymer.

22. Process for producing a hybrid component, comprising the steps of:
a) providing a reactive composition comprising the following constituents:
∘ at least one blocked hardener which is preferably an internally blocked uretdione having an NCO functionality of at least two,
∘ at least one binder which is a polyol compound having an OH functionality of 3 to 6 and which has at least one polar functional group selected from an ester, carbonate, amide, urethane, urea, thioester or thiocarbonate functionality,
∘ at least one co-binder which is an epoxy resin,
∘ at least one hardener which corresponds to the co-binder and is selected from the group comprising the following substance classes: aliphatic polyamines, cycloaliphatic polyamines, polyetheramines, polymercaptans or polyamidoamines, polycarboxylic acids, polycarboxylic anhydrides;
with use of a polyol compound or a mixture of a number of polyol compounds as binder, the OH number determined according to DIN 53 240-2 or mean OH number of which is above 300 mg KOH/g, and/or
with choice of the proportion of corresponding hardener in the reactive composition at greater than 2% by weight, based on the total solids content of the reactive composition;
b) providing fibres;
c) coating the fibres with the reactive composition;
d) exposing at least the reactive composition to heat to perform a first crosslinking reaction, in the course of which hardener and binder are converted to a thermoplastic polymer having a glass transition temperature above 30°C, the fibres being embedded into the thermoplastic polymer;
e) obtaining a prepreg comprising a thermoplastic polymer with the fibres embedded therein, a prepreg having a temperature-dependent surface tack having a value according to the loop method defined in DIN EN 1719 of less than 1 newton when the temperature of the prepreg is between 15°C and 25°C, and having a value according to the loop method defined in DIN EN 1719 of between 5 newtons and 30 newtons when the temperature of the prepreg is between 50°C and 100°C;
f) storing and/or transporting the prepreg over a period of one day up to one year at temperatures between 15°C and 30°C and then:
g) providing a metallic workpiece;
h) handling the prepreg at a temperature between 15°C and 25°C
i) pressing the prepreg at a temperature between 50°C and 100°C onto the metallic workpiece without use of an adhesive, such that the prepreg sticks to the workpiece;
n) optionally: forming the workpiece with the prepreg stuck to it;
o) exposing the prepreg stuck to the workpiece to heat to perform a second crosslinking reaction, in the course of which the thermoplastic polymer is converted to a thermoset polymer;
p) obtaining a hybrid component comprising the metallic workpiece with the thermoset polymer stuck to it, the latter enclosing the fibres embedded therein as matrix.

23. Hybrid component produced according to Claim 22.

## Revendications

1. Procédé de fabrication d'un préimprégné, comprenant les étapes suivantes :
a) la préparation d'une composition réactive contenant au moins les constituants suivants :
- au moins un durcisseur bloqué, qui est de préférence une uretdione bloquée en interne, dont la fonctionnalité NCO est d'au moins deux,
- au moins un liant, qui est un composé de polyol dont la fonctionnalité OH est de trois à six, et qui comprend au moins un groupe fonctionnel polaire qui est choisi parmi une fonctionnalité ester, carbonate, amide, uréthane, urée, thioester ou thiocarbonate,
- au moins un co-liant, qui est une résine époxyde,
- au moins un durcisseur correspondant au co-liant, qui est choisi dans le groupe comprenant les classes de substances suivantes : les polyamines aliphatiques, les polyamines cycloaliphatiques, les polyéther-amines, les polymercaptans ou les polyamidoamines, les acides polycarboxyliques, les anhydrides d'acides polycarboxyliques ;
b) la préparation de fibres ;
c) le chargement des fibres avec la composition réactive ;
d) l'exposition au moins de la composition réactive à de la chaleur pour la réalisation d'une première réaction de réticulation, au cours de laquelle le durcisseur et le liant sont transformés en un polymère thermoplastique, les fibres étant incorporées dans le polymère thermoplastique ;
e) l'obtention d'un préimprégné comprenant le polymère thermoplastique avec les fibres incorporées dans celui-ci,
**caractérisé en ce que**
la composition réactive est préparée de telle sorte que la température de transition vitreuse du polymère thermoplastique mesurée par la méthode DSC selon DIN 53765 dans la deuxième courbe de chauffage à 10 K/minute soit supérieure à 30 °C, **en ce que**
i) un composé de polyol ou un mélange de plusieurs composés de polyol est utilisé en tant que liant, dont l'indice OH ou l'indice OH moyen déterminé selon DIN 53 240-2 est supérieur à 300 mg de KOH/g,
et/ou
ii) la proportion de durcisseur correspondant dans la composition réactive est choisie supérieure à 2 % en poids, par rapport à la teneur en solides totale de la composition réactive.

2. Procédé selon la revendication 1, **caractérisé en ce que** des uretdiones exemptes d'agents bloquants sont utilisées en tant que durcisseur, qui sont fabriquées à partir d'au moins une des substances suivantes :
le diisocyanate d'isophorone (IPDI), le diisocyanate d'hexaméthylène (HDI), le diisocyanatodicyclohexylméthane (H12MDI), le diisocyanate de 2-méthylpentane (MPDI), les mélanges de diisocyanate de 2,2,4-triméthylhexaméthylène et de diisocyanate de 2,4,4-triméthylhexaméthylène (TMDI), le diisocyanate de norbornane (NBDI).

3. Procédé selon la revendication 1 ou selon la revendication 2, **caractérisé en ce qu'**au moins un polyester-polyol dont l'indice OH déterminé selon DIN 53 240-2 est compris entre 20 mg de KOH/g et 500 mg de KOH/g et dont l'indice d'acidité déterminé selon DIN EN ISO 2114 est d'au plus 2 mg de KOH/g est utilisé en tant que liant.

4. Procédé selon la revendication 1 ou selon la revendication 2, **caractérisé en ce qu'**au moins une polycaprolactone dont l'indice OH déterminé selon DIN 53 240-2 est compris entre 20 mg de KOH/g et 1 000 mg de KOH/g et dont l'indice d'acidité déterminé selon DIN EN ISO 2114 est d'au plus 2 mg de KOH/g est utilisée en tant que liant.

5. Procédé selon la revendication 1 ou selon l'une quelconque des revendications 2 à 4, **caractérisé en ce que** des résines époxyde qui sont choisies dans le groupe comprenant les résines époxyde à base d'éther diglycidylique de bisphénol A, les résines époxyde à base d'éther diglycidylique de bisphénol F et les types cycloaliphatiques tels que par exemple le 3,4-époxycyclohexyl-époxyéthane ou le carboxylate de 3,4-époxycyclohexylméthyl-3,4-époxy-cyclohexane, sont utilisées en tant que co-liants.

6. Procédé selon la revendication 1 ou selon l'une quelconque des revendications 2 à 5, **caractérisé en ce que** la composition contient en tant que composant supplémentaire au moins un additif, par exemple un modificateur de rhéologie, un agent mouillant, un pigment coloré, un antimousse, un agent de démoulage, une charge, un agent d'aération, un modificateur de la résistance aux impacts, un adjuvant d'écoulement, un adjuvant de nivellement, un agent ignifuge.

7. Procédé selon la revendication 1 ou selon l'une quelconque des revendications 2 à 6, **caractérisé en ce que** la composition est préparée sous la forme d'une poudre sèche, de telle sorte que le chargement des fibres avec la composition ait lieu par étalement et/ou fusion de la poudre sur les fibres.

8. Procédé selon la revendication 1 ou selon l'une quelconque des revendications 2 à 6, **caractérisé en ce que** la composition est préparée dans un solvant liquide, les constituants de la composition étant dissous et/ou suspendus et/ou dispersés dans le solvant, de telle sorte que le chargement des fibres avec la composition ait lieu par imprégnation des fibres avec le solvant et les constituants dissous ou suspendus ou dispersés dans celui-ci, et évaporation au moins partielle du solvant des fibres au cours de la réalisation de la première réaction de réticulation.

9. Procédé selon la revendication 8, **caractérisé en ce que** le solvant est un ester ou une cétone ou un mélange qui contient au moins un ester et/ou au moins une cétone.

10. Procédé selon la revendication 8 ou 9, **caractérisé en ce que** la teneur en solides de la solution est comprise entre 30 % en poids et 80 % en poids, par rapport au poids total de la solution.

11. Procédé selon la revendication 1 ou selon l'une quelconque des revendications 2 à 10, **caractérisé en ce que** la composition réactive contient les constituants non volatils suivants :
- entre 30 % en poids et 70 % en poids de durcisseur,
- entre 30 % en poids et 70 % en poids de liant,
- plus de 0 % en poids et jusqu'à 20 % en poids de co-liant,
- plus de 0 % en poids et jusqu'à 20 % en poids de durcisseur correspondant,
- entre 0 % en poids et 5 % en poids d'additifs, la somme des constituants non volatils contenus étant de 100 % en poids.

12. Procédé selon la revendication 11, **caractérisé en ce que** la composition réactive contient :
- en tant que durcisseur, 40 % en poids à 60 % en poids d'une uretdione ou d'un mélange de plusieurs uretdiones à base de diisocyanate d'isophorone (IPDI) ;
- en tant que liant, 25 % en poids à 50 % en poids d'une polycaprolactone ou d'un mélange de plusieurs polycaprolactones ;
- en tant que co-liant, 5 % en poids à 15 % en poids d'une résine époxyde, qui est choisie dans le groupe comprenant les résines époxyde à base d'éther diglycidylique de bisphénol A, les résines époxyde à base d'éther diglycidylique de bisphénol F et les types cycloaliphatiques tels que par exemple le 3,4-époxycyclohexyl-époxyéthane ou le carboxylate de 3,4-époxycyclohexylméthyl-3,4-époxy-cyclohexane ;
- en tant que durcisseur correspondant, entre 2 % en poids et 5 % en poids d'un acide polycarboxylique et/ou d'un anhydride d'acide polycarboxylique ;
- en tant qu'additif, entre 0 % en poids et 1 % en poids d'un agent mouillant ;
la somme des constituants non volatils contenus étant de 100 % en poids.

13. Procédé selon la revendication 8 ou selon l'une quelconque des revendications 9 à 12, **caractérisé en ce qu'**au moins 98 % en poids du solvant est évaporé des fibres.

14. Procédé selon la revendication 1 ou selon l'une quelconque des revendications 2 à 13, **caractérisé en ce que** les fibres sont préparées sous la forme d'une structure textile plate sans fin à partir d'un rouleau, **en ce que** la structure textile plate est chargée en continu avec la composition réactive, et **en ce que** la structure textile plate chargée avec la composition réactive est exposée en continu à de la chaleur pour la réalisation de la première réaction de réticulation, de telle sorte que le polymère thermoplastique avec les fibres incorporées dans celui-ci forme un préimprégné sans fin en forme de bande, qui est découpé en sections individuelles, et les sections individuelles sont comprimées en couches en une pile pour former un stratifié.

15. Préimprégné comprenant un polymère thermoplastique à base de polyuréthane et de fibres incorporées dans celui-ci, le polyuréthane résultant d'une composition réactive, qui comprend les composants suivants :
- au moins un durcisseur bloqué, qui est de préférence une uretdione bloquée en interne, dont la fonctionnalité NCO est d'au moins deux,
- au moins un liant, qui est un composé de polyol dont la fonctionnalité OH est de trois à six, et qui comprend au moins un groupe fonctionnel polaire qui est choisi parmi une fonctionnalité ester, carbonate, amide, uréthane, urée, thioester ou thiocarbonate,
- au moins un co-liant, qui est une résine époxyde,
- au moins un durcisseur correspondant au co-liant, qui est choisi dans le groupe comprenant les classes de substances suivantes : les polyamines aliphatiques, les polyamines cycloaliphatiques, les polyéther-amines, les polymercaptans ou les polyamidoamines, les acides polycarboxyliques, les anhydrides d'acides polycarboxyliques ;
**caractérisé en ce que** le préimprégné présente une adhésivité de surface dépendante de la température, dont la valeur selon la méthode des boucles définie dans DIN EN 1719 est inférieure à 1 newton, lorsque la température du préimprégné est comprise entre 15 °C et 25 °C.

16. Préimprégné selon la revendication 15, **caractérisé en ce que** le préimprégné présente une adhésivité de surface dépendante de la température, dont la valeur selon la méthode des boucles définie dans DIN EN 1719 est comprise entre 5 newton et 30 newton, lorsque la température du préimprégné est comprise entre 50 °C et 100 °C.

17. Préimprégné selon la revendication 15 ou selon la revendication 16, fabriqué selon la revendication 1 ou selon l'une quelconque des revendications 2 à 14.

18. Préimprégné selon la revendication 15 ou selon la revendication 16, fabriqué selon la revendication 8 ou selon l'une quelconque des revendications 9 à 14, **caractérisé en ce que** le préimprégné présente une teneur résiduelle en solvant inférieure à 1 % en poids, par rapport au poids total du préimprégné.

19. Utilisation d'un préimprégné selon l'une quelconque des revendications 15 à 18 lors de la fabrication d'un composant hybride, selon laquelle le préimprégné est tout d'abord traité à une température comprise entre 15 °C et 25 °C, puis pressé sur une pièce métallique à une température de 50 °C à 100 °C sans utiliser d'adhésif supplémentaire, de telle sorte que le préimprégné adhère à la pièce.

20. Utilisation selon la revendication 19, selon laquelle la pièce est déformée avec le préimprégné adhérent.

21. Utilisation selon la revendication 19 ou 20, selon laquelle le préimprégné adhérent sur la pièce est exposé à de la chaleur dans une plage de température allant de 160 °C à 220 °C pour la réalisation d'une deuxième réaction de réticulation, au cours de laquelle le polymère thermoplastique est transformé en un polymère duroplastique.

22. Procédé de fabrication d'un composant hybride comprenant les étapes suivantes :
a) la préparation d'une composition réactive contenant les constituants suivants :
- au moins un durcisseur bloqué, qui est de préférence une uretdione bloquée en interne, dont la fonctionnalité NCO est d'au moins deux,
- au moins un liant, qui est un composé de polyol dont la fonctionnalité OH est de trois à six, et qui comprend au moins un groupe fonctionnel polaire qui est choisi parmi une fonctionnalité ester, carbonate, amide, uréthane, urée, thioester ou thiocarbonate,
- au moins un co-liant, qui est une résine époxyde,
- au moins un durcisseur correspondant au co-liant, qui est choisi dans le groupe comprenant les classes de substances suivantes : les polyamines aliphatiques, les polyamines cycloaliphatiques, les polyéther-amines, les polymercaptans ou les polyamidoamines, les acides polycarboxyliques, les anhydrides d'acides polycarboxyliques ;
un composé de polyol ou un mélange de plusieurs composés de polyol étant utilisé en tant que liant, dont l'indice OH ou l'indice OH moyen déterminé selon DIN 53 240-2 est supérieur à 300 mg de KOH/g,
et/ou
la proportion de durcisseur correspondant dans la composition réactive étant choisie supérieure à 2 % en poids, par rapport à la teneur en solides totale de la composition réactive ;
b) la préparation de fibres ;
c) le chargement des fibres avec la composition réactive ;
d) l'exposition au moins de la composition réactive à de la chaleur pour la réalisation d'une première réaction de réticulation, au cours de laquelle le durcisseur et le liant sont transformés en un polymère thermoplastique, dont la température de transition vitreuse mesurée par la méthode DSC selon DIN 53765 dans la deuxième courbe de chauffage à 10 K/minute est supérieure à 30 °C, les fibres étant incorporées dans le polymère thermoplastique ;
e) l'obtention d'un préimprégné comprenant le polymère thermoplastique avec les fibres incorporées dans celui-ci, le préimprégné présentant une adhésivité de surface dépendante de la température dont la valeur selon la méthode des boucles définie dans DIN EN 1719 est inférieure à 1 newton, lorsque la température du préimprégné est comprise entre 15 °C et 25 °C, et dont la valeur selon la méthode des boucles définie dans DIN EN 1719 est comprise entre 5 newton et 30 newton, lorsque la température du préimprégné est comprise entre 50 °C et 100 °C ;
f) le stockage et/ou le transport du préimprégné pendant une durée d'un jour à un an à des températures comprises entre 15 °C et 30 °C, puis ;
g) la préparation d'une pièce métallique ;
h) le traitement du préimprégné à une température comprise entre 15 °C et 25 °C ;
i) le pressage du préimprégné sur la pièce métallique à une température comprise entre 50 °C et 100 °C sans utiliser d'adhésif, de telle sorte que le préimprégné adhère sur la pièce ;
n) éventuellement : la déformation de la pièce avec le préimprégné adhérent sur celle-ci ;
o) l'exposition du préimprégné adhérent sur la pièce à de la chaleur pour la réalisation d'une deuxième réaction de réticulation, au cours de laquelle le polymère thermoplastique est transformé en un polymère duroplastique ;
p) l'obtention d'un composant hybride comprenant la pièce métallique avec le polymère duroplastique adhérent sur celle-ci, qui entoure les fibres incorporées dans celui-ci en tant que matrice.

23. Composant hybride, fabriqué selon la revendication 22.
